(19) Europäisches Patentamt
European Patent Office
Office européen des brevets

(11) **EP 4 478 199 A1**

(12) **EUROPEAN PATENT APPLICATION**
published in accordance with Art. 153(4) EPC

(43) Date of publication:
**18.12.2024 Bulletin 2024/51**

(21) Application number: **23778129.9**

(22) Date of filing: **27.03.2023**

(51) International Patent Classification (IPC):
*G06F 12/02* (2006.01)

(52) Cooperative Patent Classification (CPC):
**G06F 12/02**

(86) International application number:
**PCT/CN2023/084173**

(87) International publication number:
**WO 2023/185764 (05.10.2023 Gazette 2023/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **30.03.2022 CN 202210326125
22.03.2023 CN 202310303459**

(71) Applicant: **Huawei Technologies Co., Ltd.
Shenzhen, Guangdong 518129 (CN)**

(72) Inventors:
• LIU, Junlong
  Shenzhen, Guangdong 518129 (CN)
• CHENG, Chuanning
  Shenzhen, Guangdong 518129 (CN)
• ZHENG, Ziyong
  Shenzhen, Guangdong 518129 (CN)

(74) Representative: **Thun, Clemens
Mitscherlich PartmbB
Patent- und Rechtsanwälte
Karlstraße 7
80333 München (DE)**

(54) **MEMORY ACCESS METHOD AND RELATED DEVICE**

(57) This application provides a memory access method and a related device. The method includes: A second apparatus sends a first access request to a first apparatus, where the first access request includes an identity number, a first security check value, and first information, and the first information includes a first physical address. The first apparatus receives the first access request from the second apparatus, obtains a second security check value through computation based on the identity number and the first information, and determines an access permission of the second apparatus for the first physical address based on the first security check value and the second security check value. According to embodiments of this application, a security risk caused by accessing memory space by using a physical address can be avoided.

FIG. 5

## Description

This application claims priority to Chinese Patent Application No. 202210326125.8, filed with the China National Intellectual Property Administration on March 30, 2022 and entitled "MEMORY ACCESS METHOD AND RELATED DEVICE", which is incorporated herein by reference in its entirety. This application claims priority to Chinese Patent Application No. 202310303459.8, filed with the China National Intellectual Property Administration on March 22, 2023 and entitled "MEMORY ACCESS METHOD AND RELATED DEVICE", which is incorporated herein by reference in its entirety.

## TECHNICAL FIELD

This application relates to the field of storage technologies, and in particular, to a memory access method and a related device.

## BACKGROUND

Generally, in a heterogeneous system, apparatuses share virtual address space, and the apparatuses access memory space of each other by using virtual addresses. To reduce an address translation delay caused by virtual address-based access, in the heterogeneous system, the apparatuses may alternatively directly access the memory space of each other by using physical addresses (Physical Addresses, PAs). However, a security risk is caused when the apparatuses directly access the memory space of each other by using the physical addresses.

## SUMMARY

Embodiments of this application disclose a memory access method and a related device, to avoid a security risk caused by accessing memory space by using a physical address.

According to a first aspect, an embodiment of this application provides a memory access method, applied to a first apparatus. The method includes: receiving a first access request from a second apparatus, where the first access request includes an identity number, a first security check value, and first information, and the first information includes a first physical address; obtaining a second security check value through computation based on the identity number and the first information; and determining an access permission of the second apparatus for the first physical address based on the first security check value and the second security check value. It should be understood that the first apparatus includes a memory, physical address space of the memory includes a first physical address, and the first physical address corresponds to the first security check value. The first security check value is also obtained by the first apparatus through computation according to a method the same as that for computing the second security check value, and is sent by the first apparatus to the second apparatus in advance. It should be noted that the first apparatus and the second apparatus are connected through an interconnect bus. For example, the first apparatus or the second apparatus may be a host or a CPU on a host, an accelerator on a host, or a node device connected to a host or a CPU on a host through an I/O interface. The node device may be a GPU, a processor unit (XPU), a solid-state drive (SSD), an accelerator having a specific computing function, a smart network interface card, a network switch, or the like. It should be further noted that a path between the first apparatus and the second apparatus is secure, and when the first apparatus and the second apparatus exchange data, the data is not tampered with in an exchange process. For example, the identity number, the first security check value, and the first information that are carried in the first access request are not tampered with.

In embodiments of this application, when the second apparatus needs to access the first physical address in the first apparatus, the second apparatus sends the first access request to the first apparatus. The first access request carries the identity number, the first security check value, and the first information. The first information includes the first physical address that needs to be accessed. After receiving the first access request, the first apparatus obtains the identity number, the first security check value, and the first information from the first access request, obtains the second security check value through computation based on the identity number and the first information, and then determines, based on the first security check value and the second security check value, whether the second apparatus has the access permission for the first physical address. It should be understood that determining, based on the first security check value and the second security check value, the access permission of the second apparatus for the first physical address may be understood as a verification process. When verification succeeds, the second apparatus is permitted to access the first physical address. When verification fails, the second apparatus is prevented from accessing the first physical address. In this way, in this application, when memory space is directly accessed by using a physical address, there is a verification process. Security of physical address space of an accessed end (for example, the first apparatus) can be protected, including at least the following aspects. (1) Confidentiality of the physical address space is protected, that is, it can be ensured that the physical address space of the accessed end cannot be read by an accessing end (for example, the second apparatus) without a read permission. (2) Correctness of the physical address space is protected, that is, it can be ensured that the physical address space of the accessed end cannot be written by an accessing end without a write permission. (3) System robustness is protected, that is, it can be ensured that the physical address space of the accessed end cannot be accessed by an accessing end without an execution permission. (4) System isolation is protected, that is, the physical address space of the accessed end cannot be accessed by an accessing end without an access permission as an accessing end with the access permission. In addition, compared with that in a manner in which the accessed end determines the access permission through table lookup, in this application, "replacing lookup with computation" can be implemented, to save resources required by the accessed end to implement a complex data structure (for example, a data structure like a page table) because security verification is required. In addition, only (hardware-based) mathematical computation is required for verification, and there is no hardware action, for example, table lookup. This can reduce a delay of security verification, implement fast verification, and greatly improve efficiency of security verification.

In a possible implementation, the identity number identifies the first apparatus. When the identity number identifies the first apparatus, that is, identifies an identity of the accessed end, for example, the identity number is a globally unique identity (ID) number (referred to as a global identity ID for short below) of an accessed destination resource (that is, corresponding to the first apparatus). In embodiments of this application, each apparatus (including the first apparatus) of the accessed end can store context information related to each apparatus. After receiving the access request, the first apparatus can find, by using the identity number as an input index, the context information (for example, a subsequent first key) corresponding to the first apparatus, and further determine, based on the context information, check values (namely, the first security check value and the second security check value) used to verify an access permission of the second apparatus.

In a possible implementation, the identity number identifies the second apparatus. When the identity number identifies the second apparatus, that is, identifies an identity of the accessing end, for example, the identity number is a globally unique identity (ID) number (referred to as a global identity ID for short below) based on an access transaction (that is, corresponding to the second apparatus) sent by an I/O device/accelerator. In embodiments of this application, the first apparatus (the accessed end) can store context information of a plurality of second apparatuses (namely, accessing ends). After receiving the access request, the first apparatus can find, by using the identity number as an input index, the context information (for example, a subsequent first key) corresponding to the second apparatus, and further determine, based on the context information, check values (namely, the first security check value and the second security check value) used to verify an access permission of the second apparatus. Further, the first apparatus can further determine, based on the identity number, which second apparatus is specifically the second apparatus (the accessing end) that currently initiates access, to perform targeted management and control.

In a possible implementation, before the receiving a first access request from a second apparatus, the method further includes: receiving a physical address application request from the second apparatus, where the physical address application request includes the identity number; generating the first key for the identity number; and sending a first response to the physical address application request to the second apparatus, where the first response includes the first security check value and the first information, and the first security check value is obtained through computation based on the first key.

In this implementation, before accessing the first physical address, the second apparatus needs to obtain the first security check value and the first information. The second apparatus obtains the first security check value and the first information by sending the physical address application request to the first apparatus. The physical address application request carries the identity number identifying the first apparatus or the second apparatus. After receiving the physical address application request, the first apparatus obtains the identity number that identifies the first apparatus or the second apparatus in the physical address application request, generates the first key for the identity number, obtains the first security check value through computation based on the first key, and then sends the first security check value and the first information to the second apparatus by using the first response. In this way, it can be ensured that the access permission for the second apparatus to access the first physical address by using the first access request is opened to the second apparatus by the first apparatus. In other words, the access permission is obtained legally. For the accessed end (the first apparatus), accessing the first physical address by using the first access request is expected access. This ensures security of the physical address space of the first apparatus. It should be understood that a key generated by the accessed end for an identity number of the accessing end or the accessed end is not disclosed to the outside. In other words, the accessing end cannot obtain the key generated for the accessing end. For example, the first apparatus does not disclose the first key to the outside, and the first key cannot be obtained by the second apparatus. In addition, a security check value is obtained through computation based on the key generated for the identity number of the accessing end or accessed end. For example, the first security check value is obtained through computation based on the first key generated for the identity number of the first apparatus, or the first security check value is obtained through computation based on the first key generated for the identity number of the second apparatus. A cryptographic security mathematical computation algorithm for computing the security check value is an algorithm that is proved to be secure enough in the industry and theory. Consequently, any accessing end cannot obtain the security check value through counterfeiting or guessing (which includes obtaining, through counterfeiting or guessing, a security check value corresponding to physical address space that the any accessing end wants to attack), and cannot obtain a security check value for another accessing end through counterfeiting or guessing. Therefore, security of the physical address space of the accessed end can be ensured. For example, the second apparatus cannot obtain the first security check value through counterfeiting or guessing, and the second apparatus can only request to obtain the first security check value from the first apparatus. The second apparatus cannot obtain a security check value corresponding to another physical address that is not opened to the second apparatus for access in the first apparatus. Consequently, the second apparatus cannot access the another physical address. This ensures security of the physical address space of the first apparatus.

In an example, the key is generated according to the following formula:

$$key\_x=fun1\_RotKey(identity\ number,\ monotone\ increasing\ parameter)$$

Herein, key_x indicates the key, for example, the first key; fun1 indicates a derivation computation function, for example, is a standard key derivation function, for example, a halting key derivation function (Halting Key Derivation Function, HKDF); RotKey is a root key for derivation computation; and the monotone increasing parameter may be a counter value or system time.

In an example, the obtaining a second security check value through computation based on the identity number and the first information includes: indexing the first key based on the identity number, and obtaining the second security check value through computation based on the first key and the first information.

In an example, the security check value in this application is a message authentication code (Message Authentication Code, MAC). A computation formula of MAC is as follows:

$$MAC=fun2\_key\_x(PA\_x)$$

Herein, fun2 indicates a digest computation function, for example, is a standard digest computation function like a secure Hash algorithm (Secure Hash Algorithm, SHA)-2; key_x is the key, and the key needs to be used as an operator when fun2 is computed; and PA_x indicates a physical address. It should be understood that, if PA_x is the first physical address, and key_x is the first key, the MAC obtained through computation according to the foregoing formula is the first security check value or the second security check value.

In a possible implementation, the first information further includes a first permission value. The first permission value indicates a first access permission of the second apparatus for the first physical address. It should be understood that the first access permission includes at least one of the following: read-only, write-only, both read and write, and neither read nor write. The first permission value is represented by using 3 bits. For example, the first permission value is represented as RWX, where R indicates a read operation, W indicates a write operation, and X indicates an execution operation (for ease of description, X is omitted below). When RW=10, the first access permission is read-only. When RW=01, the first access permission is write-only. When RW=11, the first access permission is both read and write. When RW=00, the first access permission is neither read nor write. It should be noted that another permission value described below in this application uses a same representation method as the first permission value. For example, a permission value A, a permission value B, a second permission value, a third permission value, and a fourth permission value in the following all use the same representation method as the first permission value.

In this implementation, the first apparatus can notify the second apparatus of the first access permission of the second apparatus for the first physical address by using the first response, so that the second apparatus can obtain the first access permission of the second apparatus for the first physical address. Further, when the second apparatus accesses the first physical address, the first information carried in the first access request further includes the first permission value. A larger quantity of information included in the first information indicates less likeliness that the first information is counterfeited and guessed. The first security check value and the second security check value are obtained through computation based on the first information. A larger quantity of information included in the first information indicates more factors that determine the first security check value and the second security check value, less likeliness that the first security check value is counterfeited and guessed, and a lower possibility that the first security check value is verified successfully with the second security check value. This helps ensure security of the physical address space of the first apparatus. It should be noted that, when the first security check value or the second security check value is obtained through computation by using the cryptographic security mathematical computation algorithm, the first permission value may be an input parameter of the cryptographic security mathematical computation algorithm. Specifically, the first permission value is first inferred based on the first physical address, and then is used as the input parameter of the cryptographic security mathematical computation algorithm. Alternatively, various possible values of the first permission value are used as input parameters of the cryptographic security mathematical computation algorithm. To be specific, one first security check value or second security check value is computed for each possibility of the first access permission indicated by the first permission value. Because the first information includes the first permission value, when the second security check value is computed, the first permission value does not need to be inferred, or the second security check value does not need to be computed for the first access permission to be verified with the first security check value. This can reduce the delay of security verification, help implement fast verification, and greatly improve efficiency of security verification.

In an example, the security check value in this application is a MAC. The MAC is computed as follows:

$$MAC=fun2\_key\_x(PA\_x, pert\_x)$$

Herein, fun2 indicates a digest computation function; key_x is the key; PA_x indicates a physical address; and pert_x indicates the permission value A corresponding to the physical address, and the permission value A corresponding to the physical address indicates a first access permission of the accessing end for the physical address. It should be understood that, if PA_x is the first physical address, pert_x is the first permission value, and key_x is the first key, the MAC obtained through computation according to the foregoing formula is the first security check value or the second security check value.

In a possible implementation, the first information further includes a granularity of the physical address space. The granularity of the physical address space indicates a range of the physical address space. The physical address space includes the first physical address. For example, the physical address space includes a first physical address space segment. The first physical address space segment includes the first physical address. It should be noted that the granularity of the physical address space indicates the range of the physical address space. To be specific, a quantity of most significant bits is obtained by subtracting the granularity from a total quantity of bits of the physical address space. The granularity is a quantity of least significant bits. The quantity of least significant bits indicates the range of the physical address space. When the granularity is n, it indicates that the range of the physical address space is 2^n. Further, the range of the physical address space starts from an aligned address. To be specific, the range of the physical address space indicates a physical address space in which n least significant bits are all zeros to 2^n and a most significant bit of a physical address remain unchanged. For example, it is assumed that the physical address is represented by using 48 bits, and the granularity is 8. In this case, a range of a physical address space is 256, and a corresponding range of physical address space is a physical address space in which 40 most significant bits remain unchanged, and 8 least significant bits are all zeros to 256. To be specific, only 8 bits of the 8 least significant bits in 48-bit physical address space are used, that is, the address space is 0000000 to 11111111, and first 40 bits are not used.

In an example, the obtaining a second security check value through computation based on the identity number and the first information includes: indexing the first key based on the identity number; if the first information includes the first permission value, determining a most significant bit of the first physical address based on the first physical address and the granularity of the physical address space; or if the first information does not include the first permission value, determining a most significant bit of the first physical address and the first permission value based on the first physical address and the granularity of the physical address space; and obtaining the second security check value through computation based on the granularity of the physical address space, the most significant bit of the first physical address, the first permission value, and the first key.

In an example, the security check value in this application is the MAC. The MAC is computed as follows:

$$MAC=fun2\_key\_x(range\_x, pa\_align, pert\_x)$$

Herein, fun2 indicates the digest computation function; key_x indicates the key; range_x indicates the granularity of the physical address space; pa align indicates a most significant bit obtained after the physical address is aligned based on the granularity of the physical address space; and pert_x indicates the permission value A corresponding to the physical address space segment, and the permission value A corresponding to the physical address space segment indicates a first access permission of the accessing end for the physical address space segment. It should be noted that, if one physical address space segment corresponds to one permission value A, any physical address in the physical address space segment also corresponds to the permission value A. It should be understood that, if range_x is the granularity of the physical address space in the first information, pa align is the most significant bit obtained after the first physical address is aligned based on the granularity of the physical address space, pert_x is the first permission value, and key_x is the first key, the MAC obtained through computation according to the foregoing formula is the first security check value or the second security check value.

In this implementation, the first apparatus includes the memory. The physical address space of the memory includes N physical address space segments, where N is a positive integer. For example, the first apparatus divides, into the N physical address space segments based on a specific (programmable) granularity, the physical address space that is permitted to be accessed by the second apparatus. After receiving the physical address application request from the second apparatus, the first apparatus can compute one security check value for each of the N physical address space segments, to obtain N security check values. The N security check values correspond to the N physical address space segments, and the N security check values are obtained through computation based on the first key. The first response sent by the first apparatus to the second apparatus includes the granularity of the physical address space, the N physical address space segments, and the N security check values. The first physical address space segment is one of the N physical address space segments, and the first physical address is one physical address in the first physical address space segment. Therefore, a security check value corresponding to the first physical address space segment in the N security check values is the first security check value. In other words, the N security check values include the first security check value. In this case, the first information includes the granularity of the physical address space in the first response and the first physical address in the first physical address space segment. When the second apparatus accesses the first physical address, the first information carried in the first access request further includes the granularity of the physical address space. A larger quantity of information included in the first information indicates less likeliness that the first information is counterfeited and guessed. The first security check value and the second security check value are obtained through computation based on the first information. A larger quantity of information included in the first information indicates more factors that determine the first security check value and the second security check value, less likeliness that the first security check value is counterfeited and guessed, and a lower possibility that the first security check value is verified successfully with the second security check value. This helps ensure security of the physical address space of the first apparatus. It should be understood that, when the second apparatus accesses another physical address in the first physical address space segment, a security check value carried in a corresponding access request is also the first security check value. In this way, one security check value is computed for any physical address space segment, so that all physical addresses in the physical address space segment correspond to a same security check value. When accessing each physical address in the physical address space segment, the accessing end carries the same security check value, and does not need to carry different security check values for all the physical addresses in the physical address space segment. This can reduce overheads.

In a possible implementation, the first permission value further indicates a first access permission of the second apparatus for the first physical address space segment. The first apparatus includes the memory. The physical address space of the memory includes the N physical address space segments, where N is a positive integer. After receiving the physical address application request from the second apparatus, the first apparatus may determine one permission value A for each of the N physical address space segments, to obtain N permission values A. The N permission values A correspond to the N physical address space segments. Any permission value A in the N permission values A indicates a first access permission of the second apparatus for a physical address space segment corresponding to the any permission value A. The first response sent by the first apparatus to the second apparatus includes the granularity of the physical address space, the N physical address space segments, the N security check values, and the N permission values A. The first physical address space segment is one of the N physical address space segments, and the first physical address is one physical address in the first physical address space segment. Therefore, a permission value A corresponding to the first physical address space segment in the N permission values A is the first permission value. In other words, the N permission values A include the first permission value. In this implementation, the first information includes the granularity of the physical address space in the first response, the first physical address in the first physical address space segment, and the first permission value in the N permission values A. It should be understood that, when the second apparatus accesses the another physical address in the first physical address space segment, a permission value A carried in a corresponding access request is also the first permission value. In this way, one permission value A is determined for the any physical address space segment, so that all the physical addresses in the physical address space segment correspond to a same permission value A. When accessing each physical address in the physical address space segment, the accessing end carries the same permission value A, and does not need to carry different permission values A for all the physical addresses in the physical address space segment. This can reduce overheads.

In this implementation, when the second apparatus accesses the first physical address, the first information carried in the first access request further includes the first permission value. A larger quantity of information included in the first information indicates less likeliness that the first information is counterfeited and guessed. The first security check value and the second security check value are obtained through computation based on the first information. A larger quantity of information included in the first information indicates more factors that determine the first security check value and the second security check value, less likeliness that the first security check value is counterfeited and guessed, and a lower possibility that the first security check value is verified successfully with the second security check value. This helps ensure security of the physical address space of the first apparatus. It should be noted that, when the first security check value or the second security check value is obtained through computation by using the cryptographic security mathematical computation algorithm, the first permission value may be the input parameter of the cryptographic security mathematical computation algorithm. Specifically, the first permission value is first inferred based on the first physical address and the granularity of the physical address space, and then is used as the input parameter of the cryptographic security mathematical computation algorithm. Alternatively, various possible values of the first permission value are used as input parameters of the cryptographic security mathematical computation algorithm. To be specific, one first security check value or second security check value is computed for each possibility of the first access permission indicated by the first permission value. Because the first information includes the first permission value, when the second security check value is computed, the first permission value does not need to be inferred, or the second security check value does not need to be computed for the first access permission to be verified with the first security check value. This can reduce the delay of security verification, help implement fast verification, and greatly improve efficiency of security verification.

In a possible implementation, the determining an access permission of the second apparatus for the first physical address based on the first security check value and the second security check value includes: verifying the first security check value with the second security check value; and if the first security check value is verified successfully with the second security check value, determining that the access permission of the second apparatus for the first physical address is access permitted. That the access permission is access permitted includes at least one of the following: read-only, write-only, and both read and write.

In this implementation, the second apparatus can be permitted to access the first physical address, that is, the access permission of the second apparatus for the first physical address is access permitted, only when the first security check value is verified successfully with the second security check value. That the first security check value is verified successfully with the second security check value may mean that the first security check value and the second security check value are the same, for example, the first security check value and the second security check value are message authentication codes (Message Authentication Codes, MACs). This is not limited thereto, and depends on a specific cryptographic security mathematical computation algorithm.

In a possible implementation, the first security check value and the second security check value are obtained through computation based on the first key. The method further includes: generating a second key for the identity number; sending an invalidation command to the second apparatus, where the invalidation command is used to invalidate the first physical address or the first physical address space segment; and replacing the first key with the second key after receiving a response to the invalidation command from the second apparatus or after the invalidation command expires.

In this implementation, when an access permission of the second apparatus for the first physical address or the first physical address space segment needs to be changed, for example, when the second apparatus is required to have no access permission for the first physical address or the first physical address space segment, that is, when the first physical address or the first physical address space segment is invalidated, the second key can be regenerated for the identity number identifying the first apparatus or the second apparatus. The regenerated second key is used to replace the original first key for security verification. Then, when the second apparatus accesses the first physical address or the first physical address space segment again, a security check value carried in an access request is still the first security check value. The first security check value is obtained through computation based on the first key. After receiving the access request, the first apparatus computes a security check value based on the second key. Therefore, the security check value obtained by the first apparatus through computation and the first security check value carried in the access request fail in verification, to prevent the second apparatus from accessing the first physical address or the first physical address space segment, that is, enable the second apparatus to have no access permission for the first physical address or the first physical address space segment. In this way, if the accessed end needs to change an access permission of the accessing end for a physical address or a physical address space segment, the accessed end can regenerate a new key for the identity number of the accessing end or the accessed end, to replace an old key, so as to change the access permission of the accessing end for the physical address or the physical address space segment. Sequentially, the accessed end can flexibly manage the physical address space, including dynamically allocating the physical address space segment, dynamically modifying an access permission for the allocated physical address space segment, and dynamically recycling the allocated physical address space segment. In addition, when the identity number identifies the second apparatus, namely, the accessing end, the accessed end can accurately obtain an identity number of each second apparatus when managing the physical address space, to ensure that different identity numbers do not affect each other.

In a possible implementation, after the invalidation command is sent to the second apparatus and before the response to the invalidation command is received or before the invalidation command expires, the method further includes: receiving a security check value obtaining request from the second apparatus, where the security check value obtaining request includes the identity number, a third security check value, and second information, the third security check value is obtained through computation based on the first key, and the second information includes a second physical address; obtaining a fourth security check value through computation based on the identity number, the second information, and the first key; verifying the third security check value with the fourth security check value; and if the third security check value is verified successfully with the fourth security check value, sending a second response to the security check value obtaining request to the second apparatus, where the second response includes a fifth security check value, and the fifth security check value is obtained through computation based on the second key. It should be understood that the first apparatus includes the memory, the physical address space of the memory includes the second physical address, and the second physical address is different from the first physical address, that is, the second physical address is not to be invalidated. The second physical address corresponds to the third security check value. The third security check value is also obtained by the first apparatus through computation according to a method the same as that for computing the fourth security check value, and is sent by the first apparatus to the second apparatus in advance.

In this implementation, when the first physical address or the first physical address space segment is invalidated, the first apparatus regenerates the second key for the identity number of the first apparatus or the second apparatus, to replace the first key. The third security check value corresponding to the second physical address that is not invalidated is obtained through computation based on the first key. To ensure that the second apparatus still has an access permission for the second physical address, the second apparatus needs to obtain the fifth security check value that corresponds to the second physical address and that is obtained through computation based on the second key. The fifth security check value can be used to replace the third security check value. Therefore, the second apparatus sends the security check value obtaining request to the first apparatus, and the first apparatus sends the fifth security check value to the second apparatus by using the second response, to ensure that the second apparatus still has the access permission for the second physical address. It should be noted that, when the accessing end re-obtains a security check value from the accessed end, security verification also needs to be performed, to further protect security of the physical address space of the accessed end. It should be understood that, for the first physical address or the first physical address space segment to be invalidated, even if the second apparatus requests to re-obtain a new security check value that is obtained through computation for the first physical address or the first physical address space segment based on the second key, the first apparatus does not send the new security check value. In this way, for a physical address or a physical address space segment to be invalidated, no new security check value is provided to the accessing end, and the accessing end cannot obtain a new security check value through guessing. Therefore, the accessing end definitely fails in verification performed by the accessed end, that is, has no access permission for the physical address or the physical address space segment to be invalidated. This protects security of the physical address space of the accessed end.

In a possible implementation, the second information further includes the second permission value. The second permission value indicates a first access permission of the second apparatus for the second physical address.

In a possible implementation, the second information further includes the granularity of the physical address space. The granularity of the physical address space indicates the range of the physical address space. The physical address space includes the second physical address. For example, the physical address space includes a second physical address space segment. The second physical address space segment includes the second physical address.

In a possible implementation, the second permission value further indicates a first access permission of the second apparatus for the second physical address space segment.

In a possible implementation, after the invalidation command is sent to the second apparatus and before the response to the invalidation command is received or before the invalidation command expires, the method further includes: receiving a second access request from the second apparatus, where the second access request includes the identity number, a sixth security check value, and third information, and the third information includes a third physical address; obtaining a seventh security check value through computation based on the identity number, the third information, and the first key, and obtaining an eighth security check value through computation based on the identity number, the third information, and the second key; separately verifying the sixth security check value with the seventh security check value and the eighth security check value; and if the sixth security check value is verified successfully with the seventh security check value, or the sixth security check value is verified successfully with the eighth security check value, determining that an access permission of the second apparatus for the third physical address is access permitted. It should be understood that the first apparatus includes the memory, the physical address space of the memory includes the third physical address, and the third physical address is different from the first physical address, that is, the third physical address is not to be invalidated. The third physical address corresponds to the sixth security check value. The sixth security check value is also obtained by the first apparatus through computation according to a method the same as that for computing the seventh security check value or the eighth security check value, and is sent by the first apparatus to the second apparatus in advance. After the invalidation command is sent and before the response to the invalidation command is received or before the invalidation command expires, the security check value carried in the access request received by the first apparatus may be obtained through computation based on the old key, or may be obtained through computation based on the new key. For example, the sixth security check value may be obtained through computation based on the first key, or may be computed based on the second key.

In this implementation, although the first apparatus already regenerates the second key for the second apparatus before sending the invalidation command, the first key and the second key coexist transitorily after the first apparatus sends the invalidation command and before the first apparatus receives the response to the invalidation command or before the invalidation command expires. Consequently, within this time period, if the first apparatus receives the second access request from the second apparatus, the second apparatus is permitted to access the third physical address provided that the sixth security check value is verified successfully with any one of the seventh security check value and the eighth security check value. This ensures that the second apparatus can normally access the third physical address, that is not invalidated, in a process of invalidating the first physical address or the first physical address space segment. It should be noted that, in a process of updating a key, in this application, a mechanism in which the old key and the new key coexist transitorily within a period of time. The old key is used to only compute a security check value for verification, and is no longer used to compute a new security check value that needs to be sent to the accessing end. The new key may be used to not only compute the security check value for verification but also compute the new security check value that needs to be sent to the accessing end. In this way, a mechanism in which two keys coexist transitorily can be used, to avoid impact on access to the another physical address or another physical address space segment due to key update.

In a possible implementation, the third information further includes the third permission value. The third permission value indicates a first access permission of the second apparatus for the third physical address.

In a possible implementation, the third information further includes the granularity of the physical address space. The granularity of the physical address space indicates the range of the physical address space. The physical address space includes the third physical address. For example, the physical address space includes a third physical address space segment. The third physical address space segment includes the third physical address.

In a possible implementation, the third permission value further indicates a first access permission of the second apparatus for the third physical address space segment.

In a possible implementation, the first apparatus includes a region table (region table). The region table includes a first range index and the fourth permission value. The first range index corresponds to the fourth permission value. The fourth permission value indicates a second access permission for the first physical address or the first physical address space segment. The first information further includes the first range index. It should be noted that, when the identity number identifies the second apparatus, the accessed end may establish, for each accessing end based on an identity number of the accessing end, one region table storing a physical address space access permission, or may establish, for all the accessing ends based on identity numbers of the accessing ends, one region table storing a physical address space access permission. Alternatively, when the identity number identifies the first apparatus, the accessed end may establish, based on the identity number of the accessed end, one region table storing a physical address space access permission. For example, each entry of the region table needs only a few bits, and is used to store an access permission for a physical address or a physical address space segment. The region table may be a continuous and span-controllable lightweight table. In addition, if the entry of the region table is used to store the access permission for the physical address space segment, each entry of the region table may be continuously allocated and used, and is not bound to a specific physical address. In this way, a case in which the entry of the region table may need to be used but cannot be used because the physical address space is discrete is not caused. The first apparatus includes the memory. The physical address space of the memory includes the N physical address space segments, where N is a positive integer. After receiving the physical address application request from the second apparatus, the first apparatus may create one entry in the region table for each of the N physical address space segments, so that the region table includes N entries. The N entries correspond to the N physical address space segments. In addition, each of the N entries is used to store an access permission for a corresponding physical address space segment. Each entry includes a region number, a range index, and the permission value B. The region number indicates the physical address space segment corresponding to the entry. The range index is used to index the permission value B in the entry. The permission value B indicates a second access permission for the physical address space segment corresponding to the entry. In this way, the N entries have N range indexes and N permission values B. The N physical address space segments, the N range indexes, and the N permission values B are in a one-to-one correspondence. The first response sent by the first apparatus to the second apparatus includes the N range indexes. It should be understood that a range index that corresponds to the first physical address space segment in the N range indexes is the first range index, and the first information may include the first range index. When the second apparatus accesses the another physical address in the first physical address space segment, a range index carried in the corresponding access request is also the first range index. In this way, the any physical address space segment corresponds to one range index in the region table. Consequently, all the physical addresses in the physical address space segment correspond to a same range index. When accessing each physical address in the physical address space segment, the accessing end carries the same range index instead of carrying different range indexes for each physical address in the physical address space segment. This can reduce overheads. It should be understood that the second access permission includes at least one of the following: read-only, write-only, both read and write, and neither read nor write.

In this implementation, the first apparatus includes the region table. The first information further includes the first range index. The fourth permission value can be obtained in the region table through indexing based on the first range index, and the fourth permission value indicates the second access permission for the first physical address or the first physical address space segment. The first physical address space segment includes the first physical address. The first apparatus can send the first range index to the second apparatus by using the first response. When the second apparatus accesses the first physical address, the first information carried in the first access request further includes the first range index. A larger quantity of information included in the first information indicates less likeliness that the first information is counterfeited and guessed. The first security check value and the second security check value are obtained through computation based on the first information. A larger quantity of information included in the first information indicates more factors that determine the first security check value and the second security check value, less likeliness that the first security check value is counterfeited and guessed, and a lower possibility that the first security check value is verified successfully with the second security check value. This helps ensure security of the physical address space of the first apparatus.

In an example, the obtaining a second security check value through computation based on the identity number and the first information includes: indexing the first key based on the identity number; if the first information includes the first permission value, determining the most significant bit of the first physical address based on the first physical address and the granularity of the physical address space; or if the first information does not include the first permission value, determining the most significant bit of the first physical address and the first permission value based on the first physical address and the granularity of the physical address space; and obtaining the second security check value through computation based on the granularity of the physical address space, the most significant bit of the first physical address, the first permission value, the first range index, and the first key.

In an example, the security check value in this application is the MAC. The MAC is computed as follows:

$$MAC=fun2\_key\_x(range\_x, pa\_align, pert\_x, range\ index)$$

Herein, fun2 indicates the digest computation function; key_x indicates the key; range _x indicates the granularity of the physical address space; pa align indicates the most significant bit obtained after the physical address is aligned based on the granularity of the physical address space; pert_x indicates the permission value A corresponding to the physical address space segment, and the permission value A corresponding to the physical address space segment indicates the first access permission of the accessing end for the physical address space segment; and range index indicates a range index in the region table. It should be understood that, if range _x is the granularity of the physical address space in the first information, pa align is the most significant bit obtained after the first physical address is aligned based on the granularity of the physical address space, pert_x is the first permission value, range index is the first range index, and key_x is the first key, the MAC obtained through computation according to the foregoing formula is the first security check value or the second security check value.

In a possible implementation, the determining an access permission of the second apparatus for the first physical address based on the first security check value and the second security check value includes: verifying the first security check value with the second security check value; and if the first security check value is verified successfully with the second security check value, and the second access permission indicated by the fourth permission value is access permitted, determining that the access permission of the second apparatus for the first physical address is access permitted. It should be understood that, when there is a region table, after the security check values are verified successfully, the region table is further looked up; and access is permitted only when the second access permission indicated by the fourth permission value obtained by looking up the region table is access permitted.

In this implementation, the second apparatus can be permitted to access the first physical address, that is, the access permission of the second apparatus for the first physical address is access permitted, only when the first security check value is verified successfully with the second security check value and the second access permission indicated by the fourth permission value obtained in the region table through indexing based on the first range index carried in the first access request is access permitted. In this way, on a basis of establishing the region table, an access request sent by the accessing end further needs to carry a range index in the region table. In addition, the accessed end indexes, in a local region table based on the range index in the region table carried in the access request, an entry of a physical address or a physical address space segment to be accessed by using the access request, to obtain a corresponding permission value. For the access request, continuing access by using the access request can be permitted only when security check values are verified successfully and a second access permission indicated by the permission value obtained in the region table through indexing is access permitted. Otherwise, continuing access by using the access request is blocked.

In a possible implementation, the method further includes: modifying the fourth permission value in the region table to a fifth permission value.

In this implementation, when the access permission of the second apparatus for the first physical address or the first physical address space segment needs to be changed, for example, when the second apparatus is required to have no access permission for the first physical address or the first physical address space segment, that is, when the first physical address or the first physical address space segment is invalidated, the first apparatus needs only to change the fourth permission value in the region table to the fifth permission value. For example, the fifth permission value indicates that the second access permission for the first physical address or the first physical address space segment is access unpermitted. Then, when the second apparatus accesses the first physical address or the first physical address space segment again, the first apparatus obtains the fifth permission value in the region table through indexing based on the first range index carried in the access request, and the second access permission indicated by the fifth permission is access unpermitted. This prevents the second apparatus from accessing the first physical address or the first physical address space segment, and changes the access permission of the second apparatus for the first physical address or the first physical address space segment. In this way, if the accessed end needs to change an access permission of the accessing end for a physical address or a physical address space segment, and if the physical address or the physical address space segment has a corresponding entry in the region table, the accessed end does not need to regenerate a key for the identity number of the accessing end or the accessed end, but directly modifies a permission value of the corresponding entry in the region table, for example, may directly modify the permission value of the corresponding entry to an expected value, and remains the key for the identity number of the accessing end or the accessed end unchanged. This can reduce a frequency and additional overheads of updating the key by the accessed end because the access permission for the physical address or the physical address space segment needs to be changed, and improve efficiency of recycling the physical address space (for example, improve efficiency of invalidating the physical address or the physical address space segment).

According to a second aspect, an embodiment of this application provides a memory access method, applied to a second apparatus. The method includes: sending a first access request to a first apparatus, where the first access request includes an identity number, a first security check value, and first information, and the first information includes a first physical address; the identity number and the first information are used to obtain a second security check value through computation; and the first security check value and the second security check value are used to determine an access permission of the second apparatus for the first physical address.

In a possible implementation, the identity number identifies the first apparatus, or the identity number identifies the second apparatus.

In a possible implementation, before the sending a first access request to a first apparatus, the method further includes: sending a physical address application request to the first apparatus, where the physical address application request includes the identity number; and receiving a first response to the physical address application request from the first apparatus, where the first response includes the first security check value and the first information, the first security check value is obtained through computation based on a first key, and the first key is generated for the identity number.

In a possible implementation, the first information further includes a first permission value. The first permission value indicates a first access permission of the second apparatus for the first physical address.

In a possible implementation, the first information further includes a granularity of physical address space. The granularity of the physical address space indicates a range of the physical address space. The physical address space includes the first physical address. For example, the physical address space includes a first physical address space segment. The first physical address space segment includes the first physical address.

In a possible implementation, the first permission value further indicates a first access permission of the second apparatus for the first physical address space segment.

In a possible implementation, the method further includes: receiving an invalidation command from the first apparatus, where the invalidation command is used to invalidate the first physical address or the first physical address space; and sending a response to the invalidation command to the first apparatus.

In a possible implementation, after the invalidation command is received and before the response to the invalidation command is sent, the method further includes: sending a security check value obtaining request to the first apparatus, where the security check value obtaining request includes the identity number, a third security check value, and second information, the third security check value is obtained through computation based on the first key, and the second information includes a second physical address; and receiving a second response to the security check value obtaining request from the first apparatus, where the second response includes a fifth security check value, the fifth security check value is obtained through computation based on a second key, and the second key is generated for the identity number. The identity number, the second information, and the first key are used to obtain a fourth security check value through computation. The third security check value and the fourth security check value are used to perform verification. In addition, a verification result of the third security check value and the fourth security check value may be used to determine information content carried in the second response.

In a possible implementation, the second information further includes a second permission value. The second permission value indicates a first access permission of the second apparatus for the second physical address.

In a possible implementation, the second information further includes the granularity of the physical address space. The granularity of the physical address space indicates the range of the physical address space. The physical address space includes the second physical address. For example, the physical address space includes a second physical address space segment. The second physical address space segment includes the second physical address.

In a possible implementation, the second permission value further indicates a first access permission of the second apparatus for the second physical address space segment.

In a possible implementation, after the invalidation command is received and before the response to the invalidation command is sent, the method further includes: sending a second access request to the first apparatus, where the second access request includes the identity number, a sixth security check value, and third information, and the third information includes a third physical address. The identity number and the third information are used to obtain a seventh security check value and an eighth security check value through computation. The sixth security check value, the seventh security check value, and the eighth security check value are used to determine an access permission of the second apparatus for the third physical address.

In a possible implementation, the third information further includes a third permission value. The third permission value indicates a first access permission of the second apparatus for the third physical address.

In a possible implementation, the third information further includes the granularity of the physical address space. The granularity of the physical address space indicates the range of the physical address space. The physical address space includes the third physical address. For example, the physical address space includes a third physical address space segment. The third physical address space segment includes the third physical address.

In a possible implementation, the third permission value further indicates a first access permission of the second apparatus for the third physical address space segment.

In a possible implementation, the first apparatus includes a region table. The region table includes a first range index and a fourth permission value. The first range index corresponds to the fourth permission value. The fourth permission value indicates a second access permission for the first physical address or the first physical address space segment. The first information further includes the first range index.

It should be noted that, for beneficial effects of the second aspect, refer to the descriptions of the first aspect. Details are not described herein again.

According to a third aspect, an embodiment of this application provides a memory access apparatus, applied to a first apparatus. The apparatus includes: a communication unit, configured to receive a first access request from a second apparatus, where the first access request includes an identity number, a first security check value, and first information, and the first information includes a first physical address; and a processing unit, configured to: obtain a second security check value through computation based on the identity number and the first information; and determine an access permission of the second apparatus for the first physical address based on the first security check value and the second security check value.

In a possible implementation, the identity number identifies the first apparatus, or the identity number identifies the second apparatus.

In a possible implementation, before the receiving a first access request from a second apparatus, the communication unit is further configured to receive a physical address application request from the second apparatus, where the physical address application request includes the identity number. The processing unit is further configured to generate a first key for the identity number. The communication unit is further configured to send a first response to the physical address application request to the second apparatus, where the first response includes the first security check value and the first information, and the first security check value is obtained through computation based on the first key.

In an example, the processing unit is specifically configured to: index the first key based on the identity number, and obtain the second security check value through computation based on the first key and the first information.

In a possible implementation, the first information further includes a first permission value. The first permission value indicates a first access permission of the second apparatus for the first physical address.

In a possible implementation, the first information further includes a granularity of physical address space. The granularity of the physical address space indicates a range of the physical address space. The physical address space includes the first physical address. For example, the physical address space includes a first physical address space segment. The first physical address space segment includes the first physical address.

In a possible implementation, the first permission value further indicates a first access permission of the second apparatus for the first physical address space segment.

In an example, the processing unit is specifically configured to: index the first key based on the identity number; if the first information includes the first permission value, determine a most significant bit of the first physical address based on the first physical address and the granularity of the physical address space; or if the first information does not include the first permission value, determine a most significant bit of the first physical address and the first permission value based on the first physical address and the granularity of the physical address space; and obtain the second security check value through computation based on the granularity of the physical address space, the most significant bit of the first physical address, the first permission value, and the first key.

In a possible implementation, the processing unit is specifically configured to: verify the first security check value with the second security check value; and if the first security check value is verified successfully with the second security check value, determine that the access permission of the second apparatus for the first physical address is access permitted.

In a possible implementation, the first security check value and the second security check value are obtained through computation based on the first key. The processing unit is further configured to generate a second key for the identity number. The communication unit is further configured to send an invalidation command to the second apparatus, where the invalidation command is used to invalidate the first physical address or the first physical address space segment. The processing unit is further configured to replace the first key with the second key after a response to the invalidation command from the second apparatus is received or after the invalidation command expires.

In a possible implementation, after the invalidation command is sent to the second apparatus and before the response to the invalidation command is received or before the invalidation command expires, the communication unit is further configured to receive a security check value obtaining request from the second apparatus, where the security check value obtaining request includes the identity number, a third security check value, and second information, the third security check value is obtained through computation based on the first key, and the second information includes a second physical address. The processing unit is further configured to: obtain a fourth security check value through computation based on the identity number, the second information, and the first key; and verify the third security check value with the fourth security check value. The communication unit is further configured to: if the third security check value is verified successfully with the fourth security check value, send a second response to the security check value obtaining request to the second apparatus, where the second response includes a fifth security check value, and the fifth security check value is obtained through computation based on the second key.

In a possible implementation, the second information further includes a second permission value. The second permission value indicates a first access permission of the second apparatus for the second physical address.

In a possible implementation, the second information further includes the granularity of the physical address space. The granularity of the physical address space indicates the range of the physical address space. The physical address space includes the second physical address. For example, the physical address space includes a second physical address space segment. The second physical address space segment includes the second physical address.

In a possible implementation, the second permission value further indicates a first access permission of the second apparatus for the second physical address space segment.

In a possible implementation, after the invalidation command is sent to the second apparatus and before the response to the invalidation command is received or before the invalidation command expires, the communication unit is further configured to receive a second access request from the second apparatus, where the second access request includes the identity number, a sixth security check value, and third information, and the third information includes a third physical address. The processing unit is further configured to: obtain a seventh security check value through computation based on the identity number, the third information, and the first key, and obtain an eighth security check value through computation based on the identity number, the third information, and the second key; separately verify the sixth security check value with the seventh security check value and the eighth security check value; and if the sixth security check value is verified successfully with the seventh security check value, or the sixth security check value is verified successfully with the eighth security check value, determine that an access permission of the second apparatus for the third physical address is access permitted.

In a possible implementation, the third information further includes a third permission value. The third permission value indicates a first access permission of the second apparatus for the third physical address.

In a possible implementation, the third information further includes the granularity of the physical address space. The granularity of the physical address space indicates the range of the physical address space. The physical address space includes the third physical address. For example, the physical address space includes a third physical address space segment. The third physical address space segment includes the third physical address.

In a possible implementation, the third permission value further indicates a first access permission of the second apparatus for the third physical address space segment.

In a possible implementation, the first apparatus includes a region table. The region table includes a first range index and a fourth permission value. The first range index corresponds to the fourth permission value. The fourth permission value indicates a second access permission for the first physical address or the first physical address space segment. The first information further includes the first range index.

In an example, the processing unit is specifically configured to: index the first key based on the identity number; if the first information includes the first permission value, determine the most significant bit of the first physical address based on the first physical address and the granularity of the physical address space; or if the first information does not include the first permission value, determine the most significant bit of the first physical address and the first permission value based on the first physical address and the granularity of the physical address space; and obtain the second security check value through computation based on the granularity of the physical address space, the most significant bit of the first physical address, the first permission value, the first range index, and the first key.

In a possible implementation, the processing unit is specifically configured to: verify the first security check value with the second security check value; and if the first security check value is verified successfully with the second security check value, and the second access permission indicated by the fourth permission value is access permitted, determine that the access permission of the second apparatus for the first physical address is access permitted.

In a possible implementation, the processing unit is further configured to modify the fourth permission value in the region table to a fifth permission value.

It should be noted that, for beneficial effects of the third aspect, refer to the descriptions of the first aspect. Details are not described herein again.

According to a fourth aspect, an embodiment of this application provides a memory access apparatus, applied to a second apparatus. The apparatus includes: a communication unit, configured to send a first access request to a first apparatus, where the first access request includes an identity number, a first security check value, and first information, and the first information includes a first physical address; the identity number and the first information are used to obtain a second security check value through computation; and the first security check value and the second security check value are used to determine an access permission of the second apparatus for the first physical address.

In a possible implementation, the identity number identifies the first apparatus, or the identity number identifies the second apparatus.

In a possible implementation, before the sending a first access request to a first apparatus, the communication unit is further configured to: send a physical address application request to the first apparatus, where the physical address application request includes the identity number; and receive a first response to the physical address application request from the first apparatus, where the first response includes the first security check value and the first information, the first security check value is obtained through computation based on a first key, and the first key is generated for the identity number.

In a possible implementation, the first information further includes a first permission value. The first permission value indicates a first access permission of the second apparatus for the first physical address.

In a possible implementation, the first information further includes a granularity of physical address space. The granularity of the physical address space indicates a range of the physical address space. The physical address space includes the first physical address. For example, the physical address space includes a first physical address space segment. The first physical address space segment includes the first physical address.

In a possible implementation, the first permission value further indicates a first access permission of the second apparatus for the first physical address space segment.

In a possible implementation, the communication unit is further configured to: receive an invalidation command from the first apparatus, where the invalidation command is used to invalidate the first physical address or the first physical address space; and send a response to the invalidation command to the first apparatus.

In a possible implementation, after receiving the invalidation command and before sending the response to the invalidation command, the communication unit is further configured to: send a security check value obtaining request to the first apparatus, where the security check value obtaining request includes the identity number, a third security check value, and second information, the third security check value is obtained through computation based on the first key, and the second information includes a second physical address; and receive a second response to the security check value obtaining request from the first apparatus, where the second response includes a fifth security check value, the fifth security check value is obtained through computation based on a second key, and the second key is generated for the identity number.

In a possible implementation, the second permission value further indicates a first access permission of the second apparatus for the second physical address.

In a possible implementation, the second information further includes the granularity of the physical address space. The granularity of the physical address space indicates the range of the physical address space. The physical address space includes the second physical address. For example, the physical address space includes a second physical address space segment. The second physical address space segment includes the second physical address.

In a possible implementation, the second permission value further indicates a first access permission of the second apparatus for the second physical address space segment.

In a possible implementation, after receiving the invalidation command and before sending the response to the invalidation command, the communication unit is further configured to send a second access request to the first apparatus, where the second access request includes the identity number, a sixth security check value, and third information, and the third information includes a third physical address.

In a possible implementation, the third information further includes a third permission value. The third permission value indicates a first access permission of the second apparatus for the third physical address.

In a possible implementation, the third information further includes the granularity of the physical address space. The granularity of the physical address space indicates the range of the physical address space. The physical address space includes the third physical address. For example, the physical address space includes a third physical address space segment. The third physical address space segment includes the third physical address.

In a possible implementation, the third permission value further indicates a first access permission of the second apparatus for the third physical address space segment.

In a possible implementation, the first apparatus includes a region table. The region table includes a first range index and a fourth permission value. The first range index corresponds to the fourth permission value. The fourth permission value indicates a second access permission for the first physical address or the first physical address space segment. The first information further includes the first range index.

It should be noted that, for beneficial effects of the fourth aspect, refer to the descriptions of the first aspect. Details are not described herein again.

According to a fifth aspect, an embodiment of this application provides a memory access apparatus, including a processor and a transmission interface. The processor is configured to invoke a program stored in a memory, to enable the memory access apparatus to implement the method according to any one of the possible implementations of the first aspect or the second aspect.

According to a sixth aspect, an embodiment of this application provides a computer-readable storage medium. The computer-readable storage medium includes a computer program. When the computer program is run on a computer or a processor, the computer or the processor is enabled to perform the method according to any one of the possible implementations of the first aspect or the second aspect.

According to a seventh aspect, an embodiment of this application provides a chip, including a processor, configured to: invoke a computer program from a memory and run the computer program, to enable a device equipped with the chip to perform the method according to any one of the possible implementations of the first aspect or the second aspect.

According to an eighth aspect, an embodiment of this application provides a computer program product. The computer program product includes a computer program. When the computer program is run on a computer or a processor, the computer or the processor is enabled to perform the method according to any one of the possible implementations of the first aspect or the second aspect.

According to a ninth aspect, an embodiment of this application provides an electronic device. The electronic device is the first apparatus or the second apparatus, or the electronic device includes the first apparatus and/or the second apparatus.

**BRIEF DESCRIPTION OF DRAWINGS**

FIG. 1 is a schematic diagram of a scenario in which computing is delivered to a specific I/O device/accelerator for running according to an embodiment of this application;

FIG. 2 is a schematic diagram of physical address access based on a physical address space segment access permission table according to an embodiment of this application;

FIG. 3 is a schematic diagram of physical address access based on a blacklist/whitelist mechanism according to an embodiment of this application;

FIG. 4 is a schematic diagram of an example application scenario according to an embodiment of this application;

FIG. 5 is a schematic flowchart of a memory access method according to an embodiment of this application;

FIG. 6A and FIG. 6B are a schematic flowchart of a possible implementation example of the memory access method shown in FIG. 5;

FIG. 7A and FIG. 7B are a schematic flowchart of a possible implementation example of invalidating a physical address space segment in an embodiment shown in FIG. 5;

FIG. 8A and FIG. 8B are a schematic flowchart of another possible implementation example of invalidating a physical address space segment in an embodiment shown in FIG. 5;

FIG. 9 is a schematic diagram of a structure of a memory access apparatus according to an embodiment of this application; and

FIG. 10 is a schematic diagram of a structure of another memory access apparatus according to an embodiment of this application.

**DESCRIPTION OF EMBODIMENTS**

To make persons skilled in the art understand the solutions in this application better, the following clearly and completely describes the technical solutions in embodiments of this application with reference to the accompanying drawings in embodiments of this application. It is clear that the described embodiments are merely a part rather than all of embodiments of this application. All other embodiments obtained by persons of ordinary skill in the art based on embodiments of this application without creative efforts shall fall within the protection scope of this application.

The terms "include" and "have" and any variants thereof in the specification, claims, and accompanying drawings of this application are intended to cover a non-exclusive inclusion. For example, a process, a method, a system, a product, or a device that includes a series of steps or units is not limited to listed steps or units, but optionally further includes another unlisted step or unit, or optionally further includes another inherent step or unit of the process, the method, the product, or the device.

An "embodiment" mentioned in the specification means that a particular feature, structure, or characteristic described with reference to the embodiment may be included in at least one embodiment of this application. The phrase appearing in various locations in the specification does not necessarily mean a same embodiment, and does not mean an independent or alternative embodiment mutually exclusive with another embodiment. Persons skilled in the art explicitly or implicitly understand that an embodiment described in the specification may be combined with another embodiment.

First, related knowledge in this application is described, and a technical problem to be specifically resolved in this application is further analyzed and proposed, so that persons skilled in the art can understand embodiments of this application.

With popularization of computing and data-intensive application scenarios such as artificial intelligence (Artificial Intelligence, AI), self-driving computing, and cloud computing, an entire computing system is to become increasingly complex, and various dedicated computing devices will be widely integrated and applied, for example, dedicated computing devices such as a graphics processing unit (Graphics Processing Unit, GPU) and a tensor processing unit (Tensor Processing Unit, TPU). Because the dedicated computing device is connected to a host through an I/O interface, the dedicated computing device is also referred to as an I/O device of the host. Some computing on the host is delivered to a specific I/O device/accelerator for running, to reduce computing pressure of a central processing unit (Central Processing Unit, CPU) on the host. The I/O device/accelerator may be connected to the CPU on the host through an interconnect bus, for example, connected to the CPU on the host through the interconnect bus like a peripheral component interconnect express (Peripheral Component Interconnect Express, PCIe) bus or an NVLink bus.

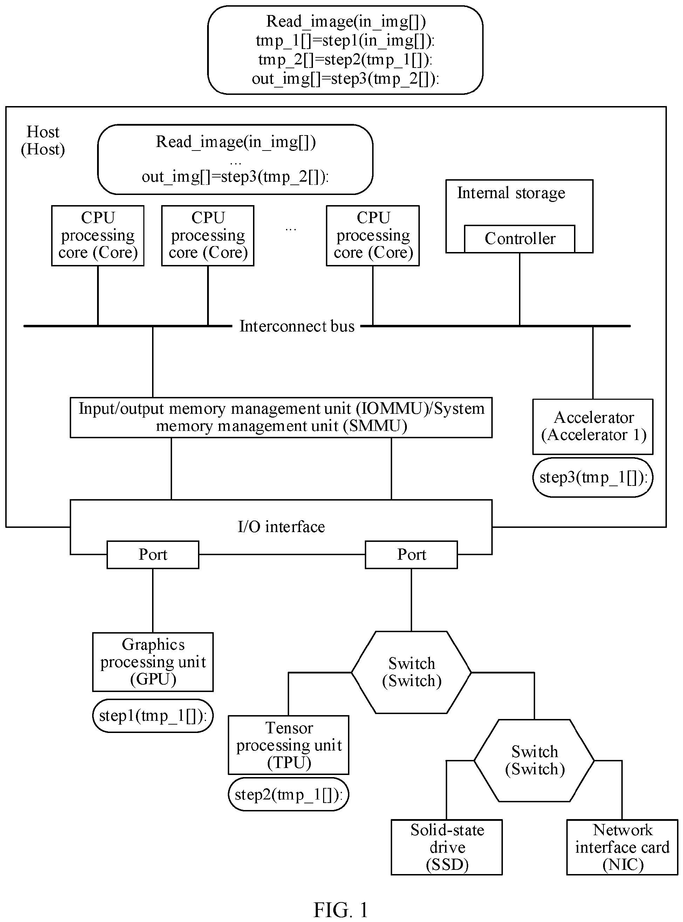

FIG. 1 is a schematic diagram of a scenario in which computing is delivered to a specific I/O device/accelerator for running according to an embodiment of this application. As shown in FIG. 1, a CPU on a host (host) needs to execute a program Read_image. The program Read_image includes three important functions: a step 1, a step 2, and a step 3. For a task of executing the program Read_image, the CPU delivers the task to an I/O device (including a GPU and a TPU) and an accelerator (Accelerator 1) of the CPU. The GPU performs the step 1, the TPU performs the step 2, and the accelerator performs the step 3. After completing computing, the GPU, the TPU, and the accelerator return, to the CPU, results obtained by the GPU, the TPU, and the accelerator through computing. Then, the CPU outputs a result of Read_image.

In a heterogeneous system, the accelerator and the CPU share virtual address space, access memory space of each other through an interconnect bus, and may implement cache (cache) coherence. In addition, the I/O device/accelerator may locally cache (cache) a page table of the CPU, to alleviate table lookup pressure of an input/output memory management unit (Input/output Memory Management Unit, IOMMU)/system memory management unit (System Memory Management Unit, SMMU) of the CPU. This is also currently an address translation service (Address Translation Service, ATS) mechanism in a PCIe bus protocol in the industry. In this case, the I/O device may directly access the memory space of the CPU (namely, memory space of the host) based on a physical address. In addition, in a direct P2P computing scenario between accelerators, the accelerators may also directly access physical address space of each other by using physical addresses. In this way, an address translation delay caused by access by using a virtual address is greatly reduced.

However, a security risk is brought when the I/O device/accelerator directly accesses the memory space of the CPU by using the physical address, or when the accelerators directly access the address space of each other by using the physical addresses, especially when the I/O device/accelerator is produced by a third party. Major security risks include:

(1) A threat to confidentiality of the memory (address) space: The I/O device/accelerator reads, by using the physical address, physical address space for which the I/O device/accelerator has no read permission.
(2) A threat to correctness of the memory (address) space: The I/O device/accelerator writes, by using the physical address, physical address space for which the I/O device/accelerator has no write permission.
(3) A threat to system robustness: The I/O device/accelerator accesses, by using the physical address, physical address space for which the I/O device/accelerator has no execution permission.
(4) A threat to system isolation (isolation): The I/O device/accelerator counterfeits an identity of another I/O device/accelerator, that has an access permission, to access physical address space for which the I/O device/accelerator has no permission for access but the another I/O device/accelerator has a permission for access.

Conventional technology 1

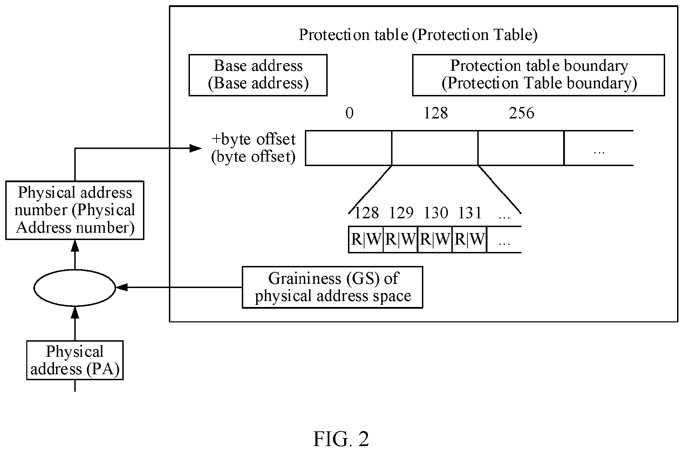

FIG. 2 is a schematic diagram of physical address access based on a physical address space segment access permission table according to an embodiment of this application. As shown in FIG. 2, a physical address space segment access permission table, for example, a protection table (Protection Table) in FIG. 2, is established based on a physical address. Each entry in the physical address space segment access permission table needs only two bits to indicate whether having only a read (Read, R for short) permission, only a write (Write, W for short) permission, both a read permission and a write permission, or neither a read permission nor a write permission. In addition, the physical address space segment access permission table is indexed based on the physical address. After the physical address space segment access permission table is established, a process in which the I/O device/accelerator directly accesses a local memory of the CPU on the host by using the physical address is as follows:

Step 1: After the physical address accessed by the I/O device/accelerator is aligned based on the physical address and a granularity (Graininess, GS for short) of the physical address space, obtain a physical address number (Physical Address number), for example, a most significant bit of the physical address, used for indexing; and then index the physical address space segment access permission table by using the most significant bit of the physical address.

Step 2: If a corresponding entry can be obtained through indexing in the physical address space segment access permission table by using the most significant bit of the physical address, perform step 3. Otherwise, directly block current physical address access.

Step 3: Determine whether permission information of the entry obtained through indexing in the physical address space segment access permission table permits current physical address access. If the current physical address access is permitted, perform normal access. Otherwise, directly block current physical address access.

It is clear that the conventional technology 1 has the following disadvantages.

(1) The physical address space segment access permission table that is indexed based on the physical address needs to be established. However, because the physical address may be fragmented (that is, discrete), the physical address space segment access permission table may have a wide span, and each entry of the physical address space segment access permission table cannot be continuously allocated and used. Because so many entries in the table that are actually used are not required, utilization of the physical address space segment access permission table is low. Especially, when a management granularity of the physical address space is fine, the physical address space segment access permission table may finally overflow to a system memory. As a result, resources such as the memory space need to be consumed.

(2) The physical address space segment access permission table needs to be looked up for all incoming physical address access. As a result, a table lookup delay is also brought. In addition, when the physical address space segment access permission table overflows to the system memory, the table lookup necessarily increases delay of access to the system memory.

(3) A threat that the I/O device/accelerator counterfeits the identity of the another I/O device/accelerator, that has the access permission, to access the physical address space for which the I/O device/accelerator has no permission for access but the another I/O device/accelerator has the permission for access cannot be prevented.

Conventional technology 2

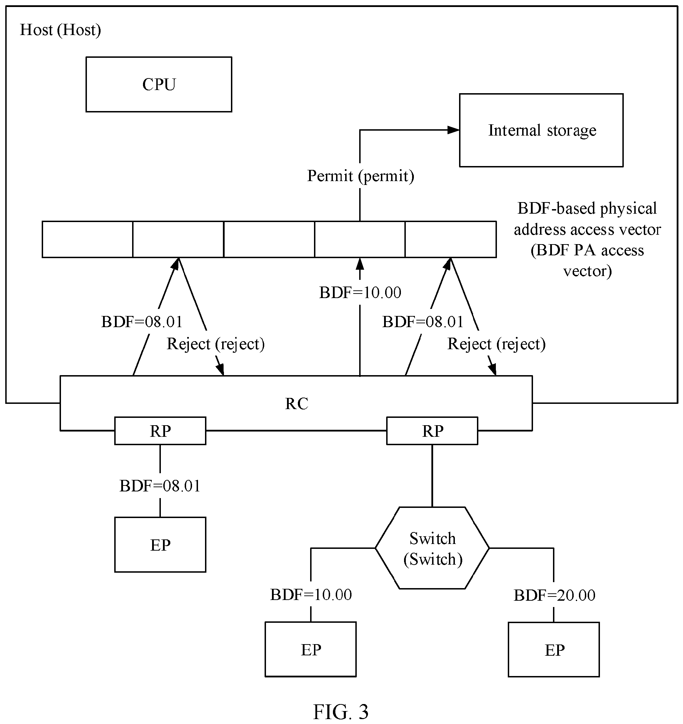

FIG. 3 is a schematic diagram of physical address access based on a blacklist/whitelist mechanism according to an embodiment of this application. As shown in FIG. 3, the host (Host) is interconnected to a PCIe device through a PCIe bus, and an endpoint (Endpoint, EP for short) is connected to an RC (Root Complex) processor through a root port (Root Port, RP for short), to access a memory of the host. The RC processor is connected to a chip bus inside a processor, and may interact with the CPU and the memory on the host. One RC may support one or more ports, and each port has an independent topology. The blacklist/whitelist mechanism for accessing the memory is established on the host. An access permission table is established locally based on an identity number of an accessing end. For example, an access permission table is established based on a bus number, a device number, and a function number (Bus number, Device number, Function number, BDF). Only a specific accessing end can succeed in verification of the access permission table, and then can access a local memory space by using the physical address. For example, an accessing end includes three endpoints. An endpoint whose BDF is equal to 08.01 and an endpoint whose BDF is equal to 20.00 have no access permission, and an endpoint whose BDF is equal to 10.00 has an access permission.

It is clear that the conventional technology 2 has the following disadvantages.

(1) A granularity of protection is large. To be specific, for access requests of specific accessing ends, all the specific accessing ends are either permitted to perform access by using the physical address or unpermitted to perform access by using the physical address.

(2) For devices in a same whitelist (the devices are permitted to perform access by using the physical address), these devices cannot be protected from affecting each other, and system isolation (isolation) cannot be ensured.

In conclusion, the technical problems to be resolved in this application may include the following:

In an interconnect bus, when an accessing end accesses memory space of an accessed end by using a physical address, for example, when the I/O device/accelerator accesses the memory space of the host or the CPU end by using the physical address, or for another example, when the accelerators access the memory space of each other by using the physical addresses, security verification can be quickly performed on current access based on the physical address, to protect security of the memory space of the accessed end. Specifically, the following is included.

(1) Protection for confidentiality of the memory (address) space: The accessing end cannot directly read, by using the physical address, physical address space for which the accessing end has no read permission.

(2) Protection for correctness of the memory (address) space: The accessing end cannot directly write, by using the physical address, physical address space for which the accessing end has no write permission.

(3) Protection for system robustness: The accessing end cannot directly access, by using the physical address, physical address space for which the accessing end has no execution permission.

(4) Protection for system isolation: The accessing end cannot counterfeit an identity of another accessing end, that has an access permission, to access physical address space for which the accessing end has no permission for access but the another accessing end has a permission for access.

(5) Protection for the physical address space can be accurately subdivided to a degree to which different users (for example, processes/virtual machines/containers) implement, for different physical address space segments, security isolation of physical address-based access.

In addition, an application scenario of this application is described as an example, so that persons skilled in the art understand embodiments of this application.

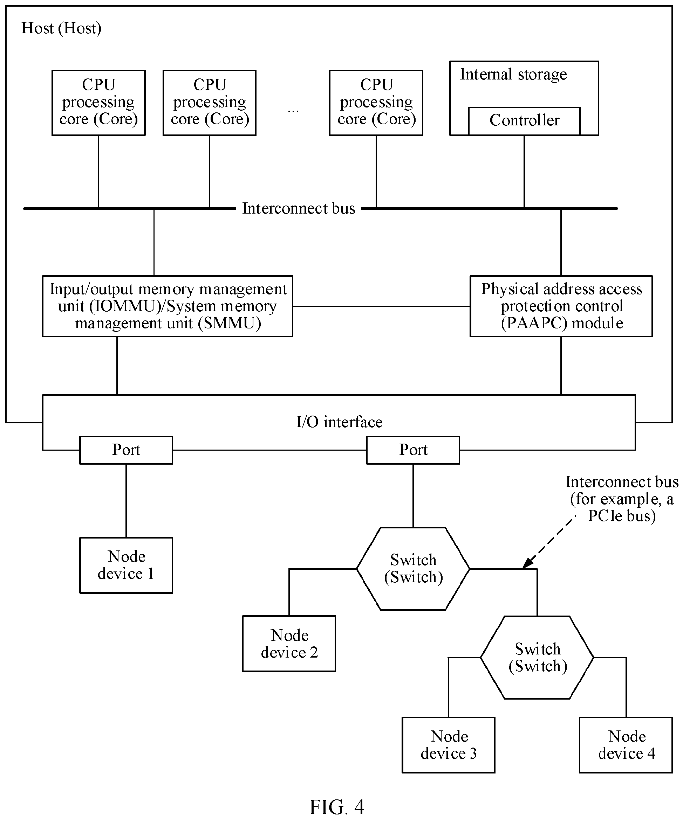

FIG. 4 is a schematic diagram of an example application scenario according to an embodiment of this application. An actual application scenario may be more complex and diversified. A system shown in FIG. 4 includes a host (Host), an I/O interface, a plurality of node devices, a switch (Switch) device, and the like.

The host (Host) is a computing system that has one or more CPUs, a main memory, a cache (for example, a cache), an IOMMU/SMMU module, an internal interconnect bus, an I/O interconnect interface, a physical address access protection control (Physical Address Accession Protection Control, PAAPC) module implemented in this application, and the like. It should be understood that an implementation architecture location of the physical address access protection control module is not the only one shown in this embodiment. For example, the physical address access protection control module may alternatively be implemented in an IOMMU/SMMU, and all transaction access from the I/O interface needs to be determined and processed by the IOMMU/SMMU module.

The plurality of node devices include a node device 1, a node device 2, a node device 3, and a node device 4. The node device 1, the node device 2, the node device 3, and the node device 4 each may be a GPU, a processor unit (XPU), a solid-state drive (SSD), an accelerator having a specific computing function, a smart network interface card, a network switch, or the like.

The switch device may implement functions of bus interconnection and routing, and may even have functions of congestion control and quality of service (Quality of Service, QoS). Some ports of the switch device may further have a function of directly interconnecting to a network, for example, a function similar to a network interface card.

The host, the node device, and the switch device may communicate with each other through the interconnect bus. For example, the host and the node device or the switch device communicate with each other through the interconnect bus, the node device and the switch device communicate with each other through the interconnect bus, and the node devices communicate with each other through the interconnect bus.

The interconnect bus between the host, the node device, and the switch device may be any interconnect bus, and is not limited to a PCIe bus, or may be another interconnect bus like an NVLink interconnect bus.

In an example, the system shown in FIG. 4 may further include an accelerator (not shown in FIG. 4). The accelerator may be connected to the CPU on the host through the interconnect bus, and may be directly or indirectly connected to the plurality of node devices through the interconnect bus.

It should be noted that, for ease of description, in this application, a device that sends a physical address-based access request is referred to as an accessing end (for example, a second apparatus in this application), and a device that receives a physical address-based access request is referred to as an accessed end (for example, a first apparatus in this application). For example, if the node device sends a physical address-based access request to the host, and the host receives the physical address-based access request, the node device is referred to as an accessing end, and the host is referred to as an accessed end. If one node device sends a physical address-based access request to another node device, and the another node device receives the physical address-based access request, the node device is referred to as an accessing end, and the another node device is referred to as an accessed end. If the accelerator sends a physical address-based access request to the CPU on the host, and the CPU on the host receives the physical address-based access request, the accelerator is referred to as an accessing end, and the CPU on the host is referred to as an accessed end. If the accelerator sends a physical address-based access request to the node device, and the node device receives the physical address-based access request, the accelerator is referred to as an accessing end, and the node device is referred to as an accessed end. If the node device sends a physical address-based access request to the accelerator, and the accelerator receives the physical address-based access request, the node device is referred to as an accessing end, and the accelerator is referred to as an accessed end.

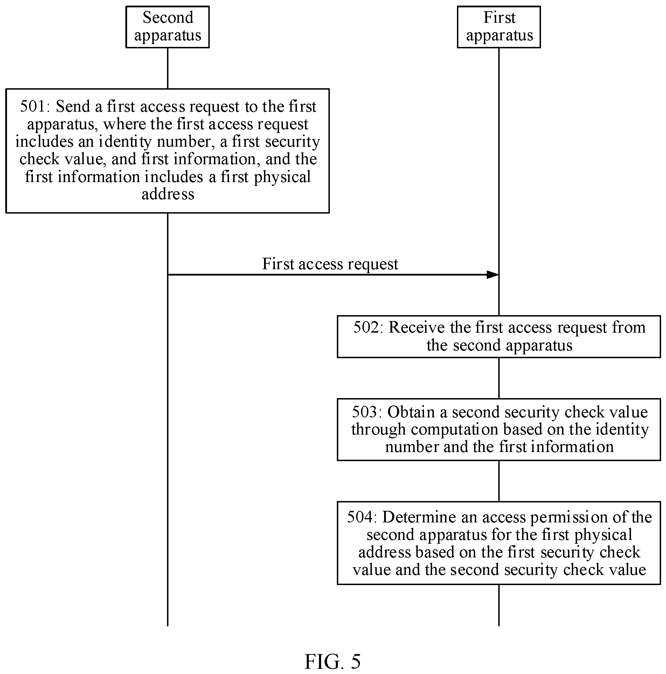

FIG. 5 is a schematic flowchart of a memory access method according to an embodiment of this application. As shown in FIG. 5, a second apparatus is an accessing end, and a first apparatus is an accessed end. The memory access method shown in FIG. 5 may be applied to the application scenario shown in FIG. 4. The first apparatus and the second apparatus are connected through an interconnect bus. For example, the first apparatus or the second apparatus may be a host or a CPU on a host, an accelerator on a host, or a node device connected to a host or a CPU on a host through an I/O interface. The node device may be a GPU, a processor unit (XPU), a solid-state drive (SSD), an accelerator having a specific computing function, a smart network interface card, a network switch, or the like. In a possible implementation, the first apparatus or the second apparatus may alternatively be a virtual resource in any one of the foregoing devices, for example, a virtual machine in the host, a virtual functional entity of the device, an operating system, or a container. A path between the first apparatus and the second apparatus is secure, and when the first apparatus and the second apparatus exchange data, the data is not tampered with in an exchange process. For example, an identity number, a first security check value, and first information that are carried in a first access request are not tampered with. The memory access method shown in FIG. 5 includes but is not limited to the following steps or operations.

501: The second apparatus sends the first access request to the first apparatus, where the first access request includes the identity number, the first security check value, and the first information, and the first information includes a first physical address.

In an example, the identity number in this embodiment of this application is a globally unique identity number (referred to as a global identity number for short below). Optionally, the identity number may identify an identity of the accessing end (the second apparatus). For example, the identity number is a globally unique identity (ID) of an access transaction (namely, the second apparatus) sent by an I/O device/accelerator, and may be specifically a globally unique identifier (Globally Unique Identifier, GUID). In another example, optionally, the identity number may identify an identity of the accessed end (the first apparatus), for example, may be a globally unique identity (ID) number (referred to as a global identity ID for short below) of an accessed destination resource (namely, the second apparatus). The global identity number may be a node identity number in an interconnection system, or may be a global identity number of a corresponding transaction (for example, an access request transaction or the accessed destination resource) managed by system software. For example, in an existing PCIe technology, the global identity number in this application is a bus number, a device number, and a function number (Bus number, Device number, Function number, BDF). If necessary, a process address space identity (Process Address Space ID, PASID) may be further added. For another example, in an SMMU system of an ARM, the global identity number is a stream identity (Stream ID). If there is a sub-stream identity (Sub-stream ID), the global identity number is the stream identity and the sub-stream identity. There is an ID with a similar logical function in another system.

It should be noted that, regardless of whether the identity number identifies the first apparatus or the second apparatus, the identity number has a same function in a process of verifying a permission of a memory access request, that is, is used by the first apparatus to derive different keys based on the identity number. Subsequent cryptographic security mathematical computation may be performed based on the derived key. For example, a subsequent first key is derived based on the identity number, a first security check value and a second security check value are generated based on the first key, and the permission of the memory access request is verified by using the two check values.

When the identity number identifies the second apparatus, the first apparatus may identify a specific identity of the second apparatus based on the identity number in the access request sent by the second apparatus. In this case, it may be understood that the first apparatus needs to maintain and store related information of a plurality of second apparatuses in advance. For example, the accessed end may establish, for each accessing end based on an identity number of the accessing end, one region table for storing a physical address space access permission, or the accessed end may establish, for all accessing ends based on identity numbers of the accessing ends, one region table for storing a physical address space access permission. There may be a large quantity of accessing ends (second apparatuses). Therefore, in this case, there may be a large quantity of region tables that need to be maintained and stored, and correspondingly, more storage resources are required. However, the first apparatus can learn, based on the identity number, which second apparatus specifically performs access. Therefore, more accurate management and control can be performed in a targeted manner.

When the identity number identifies the first apparatus, the first apparatus cannot identify a specific identity of the second apparatus based on the identity number in the access request sent by the second apparatus. In this case, it may be understood that the first apparatus needs to maintain and store related information of the first apparatus in advance. For example, the accessed end may establish, based on the identity number of the accessed end, one region table for storing a physical address space access permission. In this case, because the accessed end needs only to maintain and store the control table of the accessed end, correspondingly, a few storage resources are required. Accordingly, a few storage resources and control resources are required, that is, a large quantity of storage and maintenance costs of the region table can be reduced. Certainly, the first apparatus may still determine the corresponding first key based on the identity number, and determine the first security check value and the second security check value based on the first key.

The region table that needs to be maintained and stored in advance may be implemented by the first apparatus, or may be implemented by an operating system, virtualization software, independent management software, or the like on the first apparatus. This is not specifically limited in embodiments of this application.

Based on the foregoing analysis, it can be learned that, what is specifically identified by the identity number in embodiments of this application depends on what is specifically stored and maintained on the first apparatus. For example, if the identity number identifies the first apparatus, correspondingly, the first apparatus stores and maintains a mapping relationship between the identity number of the first apparatus and the first key, and in the verification process, the first key may be obtained through indexing by using the identity number of the first apparatus. If the identity number identifies the second apparatus, correspondingly, the first apparatus stores and maintains a mapping relationship between the identity number of the second apparatus and the first key, and in the verification process, the first key may be obtained through indexing by using the identity number of the second apparatus.

502: The first apparatus receives the first access request from the second apparatus.

503: The first apparatus obtains the second security check value through computation based on the identity number and the first information.

In an example, a security check value in this application may be a message authentication code (Message Authentication Code, MAC). For example, the first security check value and the second security check value each are a MAC. However, a possible implementation of the security check value is not limited thereto, and depends on a specific cryptographic security mathematical computation algorithm.

504: The first apparatus determines an access permission of the second apparatus for the first physical address based on the first security check value and the second security check value.

It should be understood that the first apparatus includes a memory, physical address space of the memory includes the first physical address, and the first physical address corresponds to the first security check value. The first security check value is also obtained by the first apparatus through computation according to a method the same as that for computing the second security check value, and is sent by the first apparatus to the second apparatus in advance.

The access permission of the second apparatus for the first physical address includes access permitted and access unpermitted, and may specifically include read-only permitted, write-only permitted, both read permitted and write permitted, and neither read unpermitted nor write unpermitted.

In embodiments of this application, when the second apparatus needs to access the first physical address in the first apparatus, the second apparatus sends the first access request to the first apparatus. The first access request carries the identity number that identifies the first apparatus or the second apparatus, the first security check value, and the first information. The first information includes the first physical address that needs to be accessed. After receiving the first access request, the first apparatus obtains the identity number, the first security check value, and the first information from the first access request, obtains the second security check value through computation based on the identity number and the first information, and then determines, based on the first security check value and the second security check value, whether the second apparatus has the access permission for the first physical address. It should be understood that determining, based on the first security check value and the second security check value, the access permission of the second apparatus for the first physical address may be understood as a verification process. When verification succeeds, the second apparatus is permitted to access the first physical address. When verification fails, the second apparatus is prevented from accessing the first physical address. In this way, in this application, when memory space is directly accessed by using a physical address, there is a verification process. Security of the physical address space of the accessed end can be protected, including at least the following aspects. (1) Confidentiality of the physical address space is protected, that is, it can be ensured that the physical address space of the accessed end cannot be read by an accessing end without a read permission. (2) Correctness of the physical address space is protected, that is, it can be ensured that the physical address space of the accessed end cannot be written by an accessing end without a write permission. (3) System robustness is protected, that is, it can be ensured that the physical address space of the accessed end cannot be accessed by an accessing end without an execution permission. (4) System isolation is protected, that is, the physical address space of the accessed end cannot be accessed by an accessing end without an access permission as an accessing end with the access permission. In addition, compared with that in a manner in which the accessed end determines the access permission through table lookup, in this application, "replacing lookup with computation" can be implemented, to save resources required by the accessed end to implement a complex data structure (for example, a data structure like a page table) because security verification is required. In addition, only (hardware-based) mathematical computation is required for verification, and there is no hardware action, for example, table lookup. This can reduce a delay of security verification, implement fast verification, and greatly improve efficiency of security verification.

In a possible implementation, before the first access request from the second apparatus is received, the method further includes: The first apparatus receives a physical address application request from the second apparatus, where the physical address application request includes the identity number. The first apparatus generates the first key for the identity number. The first apparatus sends a first response to the physical address application request to the second apparatus, where the first response includes the first security check value and the first information, and the first security check value is obtained through computation based on the first key. The second apparatus receives the first response from the first apparatus.

In an example, a key derivation policy may be implemented by using the following algorithm:

$$\text{key\_x=fun1\_RotKey(identity number, monotone increasing parameter)}$$

In the foregoing key derivation policy, fun1 indicates a derivation computation function, and may be a standard key derivation function, for example, a halting key derivation function (Halting Key Derivation Function, HKDF); RotKey is a root key for derivation computation; and the monotone increasing parameter may be a counter value or system time. It should be noted that, when the accessed end updates, according to the foregoing key derivation policy, a key corresponding to a global identity number, the counter value needs to be changed or new system time needs to be invoked to generate a new key, to prevent a same key from being obtained through two times of consecutive derivation computation.

It should be understood that, when the first key is generated according to the foregoing derivation policy, the first key=fun1_RotKey(identity number of the first apparatus or the second apparatus, monotone increasing parameter).

In an example, obtaining the second security check value through computation based on the identity number and the first information includes: indexing the first key based on the identity number, and obtaining the second security check value through computation based on the first key and the first information.

In an example, the security check value is the MAC. The MAC is computed as follows:

$$MAC=fun2\_key\_x(PA\_x)$$

In the foregoing computation formula of the MAC, fun2 indicates a digest computation function, and may be a standard digest computation function like a secure Hash algorithm (Secure Hash Algorithm, SHA)-2; key_x is the key, and the key needs to be used as an operator when fun2 is computed; and PA_x indicates a physical address. It should be understood that, if PA_x is the first physical address, and key_x is the first key, the MAC obtained through computation according to the foregoing formula is the first security check value or the second security check value. It should be noted that, when the second security check value is computed in the foregoing manner of computing the MAC, the first key needs to be first obtained through indexing based on the identity number of the first apparatus or the second apparatus.

In this implementation, before accessing the first physical address, the second apparatus needs to obtain the first security check value and the first information. The second apparatus obtains the first security check value and the first information by sending the physical address application request to the first apparatus. The physical address application request carries the identity number of the first apparatus or the second apparatus. After receiving the physical address application request, the first apparatus obtains the identity number of the first apparatus or the second apparatus in the physical address application request, generates the first key for the identity number of the first apparatus or the second apparatus, obtains the first security check value through computation based on the first key, and then sends the first security check value and the first information to the second apparatus by using the first response. In this way, it can be ensured that the access permission for the second apparatus to access the first physical address by using the first access request is opened to the second apparatus by the first apparatus. In other words, the access permission is obtained legally. For the accessed end (the first apparatus), accessing the first physical address by using the first access request is expected access. This ensures security of the physical address space of the first apparatus. It should be understood that the key generated by the accessed end for the identity number of the accessing end or the accessed end is not disclosed to the outside. In other words, the accessing end cannot obtain the key generated for the accessing end. For example, the first apparatus does not disclose the first key to the outside, and the first key cannot be obtained by the second apparatus. In addition, the security check value is obtained through computation based on the key generated for the identity number of the accessing end or accessed end. For example, the first security check value is obtained through computation based on the first key generated for the identity number of the first apparatus or the second apparatus. The cryptographic security mathematical computation algorithm for computing the security check value is an algorithm that is proved to be secure enough in the industry and theory. Consequently, any accessing end cannot obtain the security check value through counterfeiting or guessing (which includes obtaining, through counterfeiting or guessing, a security check value corresponding to physical address space that the any accessing end wants to attack), and cannot obtain a security check value for another accessing end through counterfeiting or guessing. Therefore, security of the physical address space of the accessed end can be ensured. For example, the second apparatus cannot obtain the first security check value through counterfeiting or guessing, and the second apparatus can only request to obtain the first security check value from the first apparatus. The second apparatus cannot obtain a security check value corresponding to another physical address that is not opened to the second apparatus for access in the first apparatus. Consequently, the second apparatus cannot access the another physical address. This ensures security of the physical address space of the first apparatus.

In a possible implementation, the first information further includes a first permission value. The first permission value indicates a first access permission of the second apparatus for the first physical address. It should be understood that the first access permission includes at least one of the following: read-only, write-only, both read and write, and neither read nor write.

The first permission value is represented by using 3 bits. For example, the first permission value is represented as RWX, where R indicates a read operation, W indicates a write operation, and X indicates an execution operation (for ease of description, X is omitted below). When RW=10, the first access permission is read-only. When RW=01, the first access permission is write-only. When RW=11, the first access permission is both read and write. When RW=00, the first access permission is neither read nor write. It should be noted that another permission value described below in this application uses a same representation method as the first permission value. For example, a permission value A, a permission value B, a second permission value, a third permission value, and a fourth permission value in the following all use the same representation method as the first permission value.

In an example, the security check value is the MAC. The MAC is computed as follows:

$$MAC=fun2\_key\_x(PA\_x, pert\_x)$$

In the foregoing computation formula of the MAC, fun2 indicates the digest computation function, and may be a standard digest computation function like the SHA-2; key_x is the key, and the key needs to be used as the operator when fun2 is computed; PA_x indicates the physical address; pert_x indicates the permission value A corresponding to a physical address, and pert_x may be an encoded value; and the permission value A corresponding to the physical address indicates a first access permission of the accessing end for the physical address.

It should be understood that, if the first information includes the first physical address and the first permission value, when the first security check value or the second security check value is computed in the foregoing manner of computing the MAC, PA_x is the first physical address, key_x is the first key, and pert_x is the first permission value. When the second security check value is computed in the foregoing manner of computing the MAC, the first key needs to be first obtained through indexing based on the identity number of the first apparatus or the second apparatus.

In this implementation, the first apparatus can notify the second apparatus of the first access permission of the second apparatus for the first physical address by using the first response, so that the second apparatus can obtain the first access permission of the second apparatus for the first physical address. Further, when the second apparatus accesses the first physical address, the first information carried in the first access request further includes the first permission value. A larger quantity of information included in the first information indicates less likeliness that the first information is counterfeited and guessed. The first security check value and the second security check value are obtained through computation based on the first information. A larger quantity of information included in the first information indicates more factors that determine the first security check value and the second security check value, less likeliness that the first security check value is counterfeited and guessed, and a lower possibility that the first security check value is verified successfully with the second security check value. This helps ensure security of the physical address space of the first apparatus. It should be noted that, when the first security check value or the second security check value is obtained through computation by using the cryptographic security mathematical computation algorithm, the first permission value may be an input parameter of the cryptographic security mathematical computation algorithm. Specifically, the first permission value is first inferred based on the first physical address, and then is used as the input parameter of the cryptographic security mathematical computation algorithm. Alternatively, various possible values of the first permission value are used as input parameters of the cryptographic security mathematical computation algorithm. To be specific, one first security check value or second security check value is computed for each possibility of the first access permission indicated by the first permission value. Because the first information includes the first permission value, when the second security check value is computed, the first permission value does not need to be inferred, or the second security check value does not need to be computed for the first access permission to be verified with the first security check value. This can reduce the delay of security verification, help implement fast verification, and greatly improve efficiency of security verification.

In a possible implementation, the first information further includes a granularity of the physical address space. The granularity of the physical address space indicates a range of the physical address space. The physical address space includes the first physical address. For example, the physical address space includes a first physical address space segment. The first physical address space segment includes the first physical address. It should be noted that the granularity of the physical address space indicates the range of the physical address space. To be specific, a quantity of most significant bits is obtained by subtracting the granularity from a total quantity of bits of the physical address space. The granularity is a quantity of least significant bits. The quantity of least significant bits indicates the range of the physical address space. When the granularity is n, it indicates that the range of the physical address space is $2^n$. Further, the range of the physical address space starts from an aligned address. To be specific, the range of the physical address space indicates a physical address space in which n least significant bits are all zeros to $2^n$ and a most significant bit of a physical address remain unchanged. For example, it is assumed that the physical address is represented by using 48 bits, and the granularity is 8. In this case, a range of a physical address space is 256, and a corresponding range of physical address space is a physical address space in which 40 most significant bits remain unchanged, and 8 least significant bits are all zeros to 256. To be specific, only 8 bits of the 8 least significant bits in 48-bit physical address space are used, that is, the address space is 0000000 to 11111111, and first 40 bits are not used.

In an example, obtaining the second security check value through computation based on the identity number and the first information includes: indexing the first key based on the identity number; if the first information includes the first permission value, determining a most significant bit of the first physical address based on the first physical address and the granularity of the physical address space; or if the first information does not include the first permission value, determining a most significant bit of the first physical address and the first permission value based on the first physical address and the granularity of the physical address space; and obtaining the second security check value through computation based on the granularity of the physical address space, the most significant bit of the first physical address, the first permission value, and the first key.

In an example, the security check value is the MAC. The MAC is computed as follows:

$$MAC = fun2\_key\_x(range\_x, pa\_align, pert\_x)$$

In the foregoing computation formula of the MAC, fun2 indicates the digest computation function, and may be the standard digest computation function like the SHA-2; key_x is the key, and the key needs to be used as the operator when fun2 is computed; range _x indicates the granularity of the physical address space, and range _x may be an encoded value; pa_align indicates a most significant bit obtained after the physical address is aligned based on the granularity of the physical address space; and pert_x indicates a permission value A corresponding to a physical address space segment, and pert_x may be the encoded value. It should be noted that, if one physical address space segment corresponds to one permission value A, any physical address in the physical address space segment also corresponds to the permission value A.

It should be understood that, if the first information includes the first physical address and the granularity of the physical address space, when the first security check value or the second security check value is computed in the foregoing manner of computing the MAC, key_x is the first key; range_x is a granularity of physical address space corresponding to the identity number of the first apparatus or the second apparatus; pa align is a most significant bit obtained after the first physical address is aligned based on the granularity of the physical address space, namely, the most significant bit of the first physical address, and the most significant bit of the first physical address may be determined based on the first physical address and the granularity of the physical address space; and pert_x is the first permission value. In this case, the first permission value indicates a first access permission of the second apparatus for the first physical address space segment, and the first permission value may be determined (inferred) based on the first physical address and the granularity of the physical address space. When the second security check value is computed in the foregoing manner of computing the MAC, the first key needs to be first obtained through indexing based on the identity number of the first apparatus or the second apparatus.

In this implementation, the first apparatus includes the memory. The physical address space of the memory includes N physical address space segments, where N is a positive integer. For example, the first apparatus divides, into the N physical address space segments based on a specific (programmable) granularity, the physical address space that is permitted to be accessed by the second apparatus. After receiving the physical address application request from the second apparatus, the first apparatus can compute one security check value for each of the N physical address space segments, to obtain N security check values. The N security check values correspond to the N physical address space segments, and the N security check values are obtained through computation based on the first key. The first response sent by the first apparatus to the second apparatus includes the granularity of the physical address space, the N physical address space segments, and the N security check values. The first physical address space segment is one of the N physical address space segments, and the first physical address is one physical address in the first physical address space segment. Therefore, a security check value corresponding to the first physical address space segment in the N security check values is the first security check value. In other words, the N security check values include the first security check value. In this case, the first information includes the granularity of the physical address space in the first response and the first physical address in the first physical address space segment. When the second apparatus accesses the first physical address, the first information carried in the first access request further includes the granularity of the physical address space. A larger quantity of information included in the first information indicates less likeliness that the first information is counterfeited and guessed. The first security check value and the second security check value are obtained through computation based on the first information. A larger quantity of information included in the first information indicates more factors that determine the first security check value and the second security check value, less likeliness that the first security check value is counterfeited and guessed, and a lower possibility that the first security check value is verified successfully with the second security check value. This helps ensure security of the physical address space of the first apparatus. It should be understood that, when the second apparatus accesses another physical address in the first physical address space segment, a security check value carried in a corresponding access request is also the first security check value. In this way, one security check value is computed for any physical address space segment, so that all physical addresses in the physical address space segment correspond to a same security check value. When accessing each physical address in the physical address space segment, the accessing end carries the same security check value, and does not need to carry different security check values for all the physical addresses in the physical address space segment. This can reduce overheads.

In a possible implementation, the first permission value further indicates a first access permission of the second apparatus for the first physical address space segment. The first apparatus includes the memory. The physical address space of the memory includes the N physical address space segments, where N is a positive integer. After receiving the physical address application request from the second apparatus, the first apparatus may determine one permission value A for each of the N physical address space segments, to obtain N permission values A. The N permission values A correspond to the N physical address space segments. Any permission value A in the N permission values A indicates a first access permission of the second apparatus for a physical address space segment corresponding to the any permission value A. The first response sent by the first apparatus to the second apparatus includes the granularity of the physical address space, the N physical address space segments, the N security check values, and the N permission values A. The first physical address space segment is one of the N physical address space segments, and the first physical address is one physical address in the first physical address space segment. Therefore, a permission value A corresponding to the first physical address space segment in the N permission values A is the first permission value. In other words, the N permission values A include the first permission value. In this implementation, the first information includes the granularity of the physical address space in the first response, the first physical address in the first physical address space segment, and the first permission value in the N permission values A. It should be understood that, when the second apparatus accesses the another physical address in the first physical address space segment, a permission value A carried in a corresponding access request is also the first permission value. In this way, one permission value A is determined for the any physical address space segment, so that all the physical addresses in the physical address space segment correspond to a same permission value A. When accessing each physical address in the physical address space segment, the accessing end carries the same permission value A, and does not need to carry different permission values A for all the physical addresses in the physical address space segment. This can reduce overheads.

In an example, the security check value is the MAC. The MAC is computed as follows:

$$MAC = fun2\_key\_x(range\_x, pa\_align, pert\_x)$$

In the foregoing computation formula of the MAC, fun2 indicates the digest computation function, and may be the standard digest computation function like the SHA-2; key_x is the key, and the key needs to be used as the operator when fun2 is computed; range _x indicates the granularity of the physical address space, and range _x may be the encoded value; pa_align indicates a most significant bit obtained after the physical address is aligned based on the granularity of the physical address space; and pert_x indicates a permission value A corresponding to a physical address space segment, and pert_x may be the encoded value.

It should be understood that, if the first information includes the first physical address, the granularity of the physical address space, and the first permission value, when the first security check value or the second security check value is computed in the foregoing manner of computing the MAC, key_x is the first key; range_x is the granularity of the physical address space corresponding to the identity number of the first apparatus or the second apparatus; pa align is the most significant bit obtained after the first physical address is aligned based on the granularity of the physical address space, namely, the most significant bit of the first physical address, and the most significant bit of the first physical address may be determined based on the first physical address and the granularity of the physical address space; and pert_x is the first permission value. In this case, the first permission value indicates the first access permission of the second apparatus for the first physical address space segment. When the second security check value is computed in the foregoing manner of computing the MAC, the first key needs to be first obtained through indexing based on the identity number of the first apparatus or the second apparatus. In this case, the first permission value is carried in the first access request.

In this implementation, when the second apparatus accesses the first physical address, the first information carried in the first access request further includes the first permission value. A larger quantity of information included in the first information indicates less likeliness that the first information is counterfeited and guessed. The first security check value and the second security check value are obtained through computation based on the first information. A larger quantity of information included in the first information indicates more factors that determine the first security check value and the second security check value, less likeliness that the first security check value is counterfeited and guessed, and a lower possibility that the first security check value is verified successfully with the second security check value. This helps ensure security of the physical address space of the first apparatus. It should be noted that, when the first security check value or the second security check value is obtained through computation by using the cryptographic security mathematical computation algorithm, the first permission value may be the input parameter of the cryptographic security mathematical computation algorithm. Specifically, the first permission value is first inferred based on the first physical address and the granularity of the physical address space, and then is used as the input parameter of the cryptographic security mathematical computation algorithm. Alternatively, various possible values of the first permission value are used as the input parameters of the cryptographic security mathematical computation algorithm. To be specific, the first security check value or the second security check value is computed for each possibility of the first access permission indicated by the first permission value. Because the first information includes the first permission value, when the second security check value is computed, the first permission value does not need to be inferred, or the second security check value does not need to be computed for the first access permission to be verified with the first security check value. This can reduce the delay of security verification, help implement fast verification, and greatly improve efficiency of security verification.

In a possible implementation, determining the access permission of the second apparatus for the first physical address based on the first security check value and the second security check value includes: verifying the first security check value with the second security check value; and if the first security check value is verified successfully with the second security check value, determining that the access permission of the second apparatus for the first physical address is access permitted. That the access permission is access permitted includes at least one of the following: read-only, write-only, and both read and write.

In this implementation, the second apparatus can be permitted to access the first physical address, that is, the access permission of the second apparatus for the first physical address is access permitted, only when the first security check value is verified successfully with the second security check value. That the first security check value is verified successfully with the second security check value may mean that the first security check value and the second security check value are the same, for example, the first security check value and the second security check value are MACs. This is not limited thereto, and depends on a specific cryptographic security mathematical computation algorithm.

In a possible implementation, the first security check value and the second security check value are obtained through computation based on the first key. The method further includes: The first apparatus generates a second key for the identity number. The first apparatus sends an invalidation command to the second apparatus, where the invalidation command is used to invalidate the first physical address or the first physical address space segment. The second apparatus receives the invalidation command from the first apparatus. The second apparatus sends a response to the invalidation command to the first apparatus. The first apparatus receives the response to the invalidation command from the second apparatus. The first apparatus replaces the first key with the second key after receiving the response to the invalidation command from the second apparatus or after the invalidation command expires.

For a process in which the first apparatus generates the second key for the identity number of the first apparatus or the second apparatus, correspondingly refer to the process of generating the first key. Details are not described herein again.

Replacing the first key with the second key may mean that the first key is no longer used to compute the security check value, and only the second key is used to compute the security check value.

Optionally, after receiving the invalidation command, the second apparatus no longer sends, to the first apparatus, an access request for accessing the first physical address or the first physical address space segment.

In this implementation, when an access permission of the second apparatus for the first physical address or the first physical address space segment needs to be changed, for example, when the second apparatus is required to have no access permission for the first physical address or the first physical address space segment, that is, when the first physical address or the first physical address space segment is invalidated, the second key can be regenerated for the identity number of the first apparatus or the second apparatus. The regenerated second key is used to replace the original first key for security verification. Then, when the second apparatus accesses the first physical address or the first physical address space segment again, a security check value carried in an access request is still the first security check value. The first security check value is obtained through computation based on the first key. After receiving the access request, the first apparatus computes a security check value based on the second key. Therefore, the security check value obtained by the first apparatus through computation and the first security check value carried in the access request fail in verification, to prevent the second apparatus from accessing the first physical address or the first physical address space segment, that is, enable the second apparatus to have no access permission for the first physical address or the first physical address space segment. In this way, if the accessed end needs to change an access permission of the accessing end for a physical address or a physical address space segment, the accessed end can regenerate a new key for the identity number of the accessing end or the accessed end, to replace an old key, so as to change the access permission of the accessing end for the physical address or the physical address space segment. Sequentially, the accessed end can flexibly manage the physical address space, including dynamically allocating the physical address space segment, dynamically modifying an access permission for the allocated physical address space segment, and dynamically recycling the allocated physical address space segment. In addition, when the identity number identifies the second apparatus, namely, the accessing end, the accessed end can accurately obtain an identity number of each second apparatus when managing the physical address space, to ensure that different identity numbers do not affect each other.

In a possible implementation, after the invalidation command is sent to the second apparatus and before the response to the invalidation command is received or before the invalidation command expires, the method further includes: receiving a security check value obtaining request from the second apparatus, where the security check value obtaining request includes the identity number, a third security check value, and second information, the third security check value is obtained through computation based on the first key, and the second information includes a second physical address; obtaining a fourth security check value through computation based on the identity number, the second information, and the first key; verifying the third security check value with the fourth security check value; and if the third security check value is verified successfully with the fourth security check value, sending a second response to the security check value obtaining request to the second apparatus, where the second response includes a fifth security check value, and the fifth security check value is obtained through computation based on the second key. It should be understood that the first apparatus includes the memory, the physical address space of the memory includes the second physical address, and the second physical address is different from the first physical address, that is, the second physical address is not to be invalidated. The second physical address corresponds to the third security check value. The third security check value is also obtained by the first apparatus through computation according to a method the same as that for computing the fourth security check value, and is sent by the first apparatus to the second apparatus in advance.

For a process of computing the third security check value and the fourth security check value, correspondingly refer to the process of computing the first security check value and the second security check value. Details are not described herein again. In addition, for a process of computing the fifth security check value, also refer to the process of computing the first security check value. However, the first key needs to be replaced with the second key.

For a process of verifying the third security check value with the fourth security check value, correspondingly refer to the process of verifying the first security check value with the second security check value. Details are not described herein again.

In this implementation, when the first physical address or the first physical address space segment is invalidated, the first apparatus regenerates the second key for the identity number of the first apparatus or the second apparatus, to replace the first key. The third security check value corresponding to the second physical address that is not invalidated is obtained through computation based on the first key. To ensure that the second apparatus still has an access permission for the second physical address, the second apparatus needs to obtain the fifth security check value that corresponds to the second physical address and that is obtained through computation based on the second key. The fifth security check value can be used to replace the third security check value. Therefore, the second apparatus sends the security check value obtaining request to the first apparatus, and the first apparatus sends the fifth security check value to the second apparatus by using the second response, to ensure that the second apparatus still has the access permission for the second physical address. It should be noted that, when the accessing end re-obtains a security check value from the accessed end, security verification also needs to be performed, to further protect security of the physical address space of the accessed end. It should be understood that, for the first physical address or the first physical address space segment to be invalidated, even if the second apparatus requests to re-obtain a new security check value that is obtained through computation for the first physical address or the first physical address space segment based on the second key, the first apparatus does not send the new security check value. In this way, for a physical address or a physical address space segment to be invalidated, no new security check value is provided to the accessing end, and the accessing end cannot obtain a new security check value through guessing. Therefore, the accessing end definitely fails in verification performed by the accessed end, that is, has no access permission for the physical address or the physical address space segment to be invalidated. This protects security of the physical address space of the accessed end.

In a possible implementation, the second information further includes the second permission value. The second permission value indicates a first access permission of the second apparatus for the second physical address. It should be noted that, for a specific process and beneficial effects of this implementation, refer to the descriptions of the foregoing related implementations. Details are not described herein again.

In a possible implementation, the second information further includes the granularity of the physical address space. The granularity of the physical address space indicates the range of the physical address space. The physical address space includes the second physical address. For example, the physical address space includes a second physical address space segment. The second physical address space segment includes the second physical address. It should be noted that, for a specific process and beneficial effects of this implementation, refer to the descriptions of the foregoing related implementations. Details are not described herein again.

It should be understood that the second physical address space segment may be any one of the N physical address space segments other than the first physical address space segment, that is, the second physical address space segment is a physical address space segment that does not need to be invalidated, and may continue to be accessed by the second apparatus. Further, a security check value needs to be reallocated to the physical address space segment that does not need to be invalidated, to ensure that the physical address space segment that does not need to be invalidated can be continuously accessed. Consequently, the first apparatus sends the fifth security check value to the second apparatus. The fifth security check value is not only used for verification when the second physical address is accessed, but also used for verification when all physical addresses in the second physical address space segment are accessed.

In a possible implementation, the second permission value further indicates a first access permission of the second apparatus for the second physical address space segment. It should be noted that, for a specific process and beneficial effects of this implementation, refer to the descriptions of the foregoing related implementations. Details are not described herein again.

In a possible implementation, after the invalidation command is sent to the second apparatus and before the response to the invalidation command is received or before the invalidation command expires, the method further includes: receiving a second access request from the second apparatus, where the second access request includes the identity number, a sixth security check value, and third information, and the third information includes a third physical address; obtaining a seventh security check value through computation based on the identity number, the third information, and the first key, and obtaining an eighth security check value through computation based on the identity number, the third information, and the second key; separately verifying the sixth security check value with the seventh security check value and the eighth security check value; and if the sixth security check value is verified successfully with the seventh security check value, or the sixth security check value is verified successfully with the eighth security check value, determining that an access permission of the second apparatus for the third physical address is access permitted. It should be understood that the first apparatus includes the memory, the physical address space of the memory includes the third physical address, and the third physical address is different from the first physical address, that is, the third physical address is not to be invalidated. The third physical address corresponds to the sixth security check value. The sixth security check value is also obtained by the first apparatus through computation according to a method the same as that for computing the seventh security check value or the eighth security check value, and is sent by the first apparatus to the second apparatus in advance. After the invalidation command is sent and before the response to the invalidation command is received or before the invalidation command expires, the security check value carried in the access request received by the first apparatus may be obtained through computation based on the old key, or may be obtained through computation based on the new key. For example, the sixth security check value may be obtained through computation based on the first key, or may be computed based on the second key.

For a process of computing the sixth security check value, correspondingly refer to the process of computing the first security check value or the fifth security check value. For a process of computing the seventh security check value, correspondingly refer to the process of computing the second security check value. For a process of computing the eighth security check value, correspondingly refer to the process of computing the fifth security check value. Details are not described herein again.

For a process of verifying the sixth security check value with the seventh security check value and a process of verifying the sixth security check value with the eighth security check value, correspondingly refer to the process of verifying the first security check value with the second security check value. Details are not described herein again.

In this implementation, although the first apparatus already regenerates the second key for the second apparatus before sending the invalidation command, the first key and the second key coexist transitorily after the first apparatus sends the invalidation command and before the first apparatus receives the response to the invalidation command or before the invalidation command expires. Consequently, within this time period, if the first apparatus receives the second access request from the second apparatus, the second apparatus is permitted to access the third physical address provided that the sixth security check value is verified successfully with any one of the seventh security check value and the eighth security check value. This ensures that the second apparatus can normally access the third physical address, that is not invalidated, in a process of invalidating the first physical address or the first physical address space segment. It should be noted that, in a process of updating a key, in this application, a mechanism in which the old key and the new key coexist transitorily within a period of time. The old key is used to only compute a security check value for verification, and is no longer used to compute a new security check value that needs to be sent to the accessing end. The new key may be used to not only compute the security check value for verification but also compute the new security check value that needs to be sent to the accessing end. In this way, a mechanism in which two keys coexist transitorily can be used, to avoid impact on access to the another physical address or another physical address space segment due to key update.

In a possible implementation, the third information further includes a third permission value. The third permission value indicates a first access permission of the second apparatus for the third physical address. It should be noted that, for a specific process and beneficial effects of this implementation, refer to the descriptions of the foregoing related implementations. Details are not described herein again.

In a possible implementation, the third information further includes the granularity of the physical address space. The granularity of the physical address space indicates the range of the physical address space. The physical address space includes the third physical address. For example, the physical address space includes a third physical address space segment. The third physical address space segment includes the third physical address. It should be noted that, for a specific process and beneficial effects of this implementation, refer to the descriptions of the foregoing related implementations. Details are not described herein again.

In a possible implementation, the third permission value further indicates a first access permission of the second apparatus for the third physical address space segment. It should be noted that, for a specific process and beneficial effects of this implementation, refer to the descriptions of the foregoing related implementations. Details are not described herein again.

In a possible implementation, the first apparatus includes a region table. The region table includes a first range index and a fourth permission value. The first range index corresponds to the fourth permission value. The fourth permission value indicates a second access permission for the first physical address or the first physical address space segment. The first information further includes the first range index. It should be noted that, when the identity number identifies the second apparatus, the accessed end may establish, for each accessing end based on an identity number of the accessing end, one region table storing a physical address space access permission, or may establish, for all the accessing ends based on identity numbers of the accessing ends, one region table storing a physical address space access permission. Alternatively, when the identity number identifies the first apparatus, the accessed end may establish, based on the identity number of the accessed end, one region table storing a physical address space access permission. For example, each entry of the region table needs only a few bits, and is used to store an access permission for a physical address or a physical address space segment. The region table may be a continuous and span-controllable lightweight table. In addition, if the entry of the region table is used to store the access permission for the physical address space segment, each entry of the region table may be continuously allocated and used, and is not bound to a specific physical address. In this way, a case in which the entry of the region table may need to be used but cannot be used because the physical address space is discrete is not caused. The first apparatus includes the memory. The physical address space of the memory includes the N physical address space segments, where N is a positive integer. After receiving the physical address application request from the second apparatus, the first apparatus may create one entry in the region table for each of the N physical address space segments, so that the region table includes N entries. The N entries correspond to the N physical address space segments. In addition, each of the N entries is used to store an access permission for a corresponding physical address space segment. Each entry includes a region number, a range index, and the permission value B. The region number indicates the physical address space segment corresponding to the entry. The range index is used to index the permission value B in the entry. The permission value B indicates a second access permission for the physical address space segment corresponding to the entry. In this way, the N entries have N range indexes and N permission values B. The N physical address space segments, the N range indexes, and the N permission values B are in a one-to-one correspondence. The first response sent by the first apparatus to the second apparatus includes the N range indexes. It should be understood that a range index that corresponds to the first physical address space segment in the N range indexes is the first range index, and the first information may include the first range index. When the second apparatus accesses the another physical address in the first physical address space segment, a range index carried in the corresponding access request is also the first range index. In this way, the any physical address space segment corresponds to one range index in the region table. Consequently, all the physical addresses in the physical address space segment correspond to a same range index. When accessing each physical address in the physical address space segment, the accessing end carries the same range index instead of carrying different range indexes for each physical address in the physical address space segment. This can reduce overheads.

The second access permission includes at least one of the following: read-only, write-only, both read and write, and neither read nor write. For example, Table 1 is an example of a region table.

**Table 1: Region table**

| Region number | Permission value B | Range index |
|---|---|---|
| PA 0 | R\|W | 0 |
| PA 1 | R\|W | 1 |
| PA 2 | R\|W | 2 |
| PA 3 | R\|W | 3 |

In Table 1, there are entries of four physical address space segments in total, which are respectively entries of a physical address space segment PA 0, a physical address space segment PA 1, a physical address space segment PA 2, and a physical address space segment PA 3, where R indicates a read permission, and W indicates a write permission. It should be understood that, when a permission is granted to a physical address space segment, the permission is granted to all physical addresses in the physical address space segment. For example, if the physical address space segment PA 0 permits write, all physical addresses in the physical address space segment PA 0 permit write.

In an example, obtaining the second security check value through computation based on the identity number and the first information includes: indexing the first key based on the identity number; if the first information includes the first permission value, determining the most significant bit of the first physical address based on the first physical address and the granularity of the physical address space; or if the first information does not include the first permission value, determining the most significant bit of the first physical address and the first permission value based on the first physical address and the granularity of the physical address space; and obtaining the second security check value through computation based on the granularity of the physical address space, the most significant bit of the first physical address, the first permission value, the first range index, and the first key.

In an example, the security check value in this application is the MAC. The MAC is computed as follows:

$$MAC = fun2\_key\_x(range\_x, pa\_align, pert\_x, range\ index)$$

Herein, fun2 indicates the digest computation function; key_x indicates the key; range_x indicates the granularity of the physical address space; pa align indicates the most significant bit obtained after the physical address is aligned based on the granularity of the physical address space; pert_x indicates the permission value A corresponding to the physical address space segment, and the permission value A corresponding to the physical address space segment indicates the first access permission of the accessing end for the physical address space segment; and range index indicates a range index in the region table. It should be understood that, if range_x is the granularity of the physical address space in the first information, pa align is the most significant bit obtained after the first physical address is aligned based on the granularity of the physical address space, pert_x is the first permission value, range index is the first range index, and key_x is the first key, the MAC obtained through computation according to the foregoing formula is the first security check value or the second security check value.

In this implementation, the first apparatus includes the region table. The first information further includes the first range index. The fourth permission value can be obtained in the region table through indexing based on the first range index, and the fourth permission value indicates the second access permission for the first physical address or the first physical address space segment. The first physical address space segment includes the first physical address. The first apparatus can send the first range index to the second apparatus by using the first response. When the second apparatus accesses the first physical address, the first information carried in the first access request further includes the first range index. A larger quantity of information included in the first information indicates less likeliness that the first information is counterfeited and guessed. The first security check value and the second security check value are obtained through computation based on the first information. A larger quantity of information included in the first information indicates more factors that determine the first security check value and the second security check value, less likeliness that the first security check value is counterfeited and guessed, and a lower possibility that the first security check value is verified successfully with the second security check value. This helps ensure security of the physical address space of the first apparatus. It should be understood that, if the fourth permission value indicates the second access permission for the first physical address space segment, when the second apparatus accesses the another physical address in the first physical address space segment, a range index in the region table carried in the corresponding access request is also the first range index. In this way, when the region table is established, one range index is determined for the any physical address space segment. Consequently, all the physical addresses in the physical address space segment correspond to a same range index. When accessing each physical address in the physical address space segment, the accessing end carries the same range index instead of carrying different range indexes for each physical address in the physical address space segment. This can reduce overheads.

In a possible implementation, determining the access permission of the second apparatus for the first physical address based on the first security check value and the second security check value includes: verifying the first security check value with the second security check value; and if the first security check value is verified successfully with the second security check value, and the second access permission indicated by the fourth permission value is access permitted, determining that the access permission of the second apparatus for the first physical address is access permitted. It should be understood that, when there is a region table, after the security check values are verified successfully, the region table is further looked up; and access is permitted only when the second access permission indicated by the fourth permission value obtained by looking up the region table is access permitted.

When there is a region table, a process of verifying the first security check value with the second security check value is the same as that when there is no region table.

In this implementation, the second apparatus can be permitted to access the first physical address, that is, the access permission of the second apparatus for the first physical address is access permitted, only when the first security check value is verified successfully with the second security check value and the second access permission indicated by the fourth permission value obtained in the region table through indexing based on the first range index carried in the first access request is access permitted. In this way, on a basis of establishing the region table, an access request sent by the accessing end further needs to carry a range index in the region table. In addition, the accessed end indexes, in a local region table based on the range index in the region table carried in the access request, an entry of a physical address or a physical address space segment to be accessed by using the access request, to obtain a corresponding permission value. For the access request, continuing access by using the access request can be permitted only when security check values are verified successfully and a second access permission indicated by the permission value obtained in the region table through indexing is access permitted. Otherwise, continuing access by using the access request is blocked.

In a possible implementation, the method further includes: modifying the fourth permission value in the region table to a fifth permission value.

The fifth permission value may be any expected value. For example, if the second access permission indicated by the fourth permission value is write-only, a second access permission indicated by the fifth permission value may include read-only permitted, both read permitted and write permitted, and neither read unpermitted nor write unpermitted.

In this implementation, when the access permission of the second apparatus for the first physical address or the first physical address space segment needs to be changed, for example, when the second apparatus is required to have no access permission for the first physical address or the first physical address space segment, that is, when the first physical address or the first physical address space segment is invalidated, the first apparatus needs only to change the fourth permission value in the region table to the fifth permission value. For example, the fifth permission value indicates that the second access permission for the first physical address or the first physical address space segment is access unpermitted. Then, when the second apparatus accesses the first physical address or the first physical address space segment again, the first apparatus obtains the fifth permission value in the region table through indexing based on the first range index carried in the access request, and the second access permission indicated by the fifth permission is access unpermitted. This prevents the second apparatus from accessing the first physical address or the first physical address space segment, and changes the access permission of the second apparatus for the first physical address or the first physical address space segment. In this way, if the accessed end needs to change an access permission of the accessing end for a physical address or a physical address space segment, and if the physical address or the physical address space segment has a corresponding entry in the region table, the accessed end does not need to regenerate a key for the identity number of the accessing end or the accessed end, but directly modifies a permission value of the corresponding entry in the region table, for example, may directly modify the permission value of the corresponding entry to an expected value, and remains the key for the identity number of the accessing end or the accessed end unchanged. This can reduce a frequency and additional overheads of updating the key by the accessed end because the access permission for the physical address or the physical address space segment needs to be changed, and improve efficiency of recycling the physical address space (for example, improve efficiency of invalidating the physical address or the physical address space segment).

The following describes the memory access method shown in FIG. 5 in more detail by using a specific example.

1. Physical address access security protection

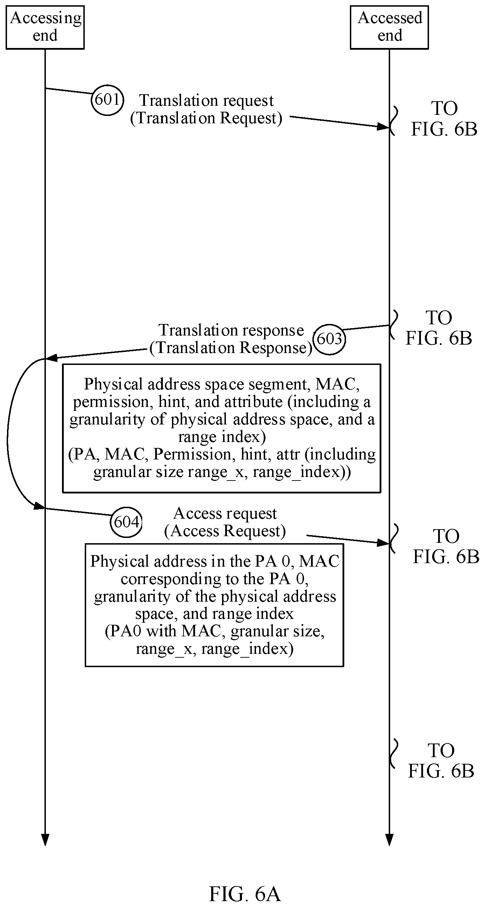

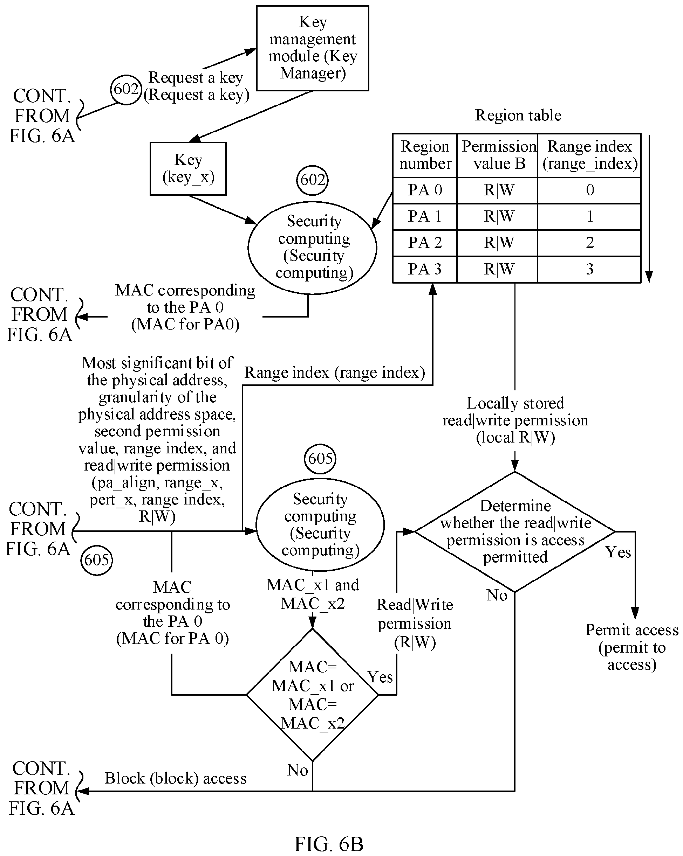

FIG. 6A and FIG. 6B are a schematic flowchart of a possible implementation example of the memory access method shown in FIG. 5. A procedure of the possible implementation example includes but is not limited to the following steps or operations:

601: The accessing end sends a translation request (Translation Request) to the accessed end.

It should be understood that, before initiating a physical address-based access request to the accessed end, the accessing end needs to obtain a to-be-accessed physical address by using a specific mechanism. In other words, the accessing end needs to send the physical address application request to the accessed end, to obtain the to-be-accessed physical address from the accessed end. For example, if the interconnect bus between the accessing end and the accessed end is a PCIe bus, the accessing end may obtain, by using an address translation service (Address Translation Service, ATS) mechanism in a PCIe, a physical address corresponding to to-be-accessed physical address space, or obtain, by using another mechanism similar to an ATS mechanism, a physical address corresponding to to-be-accessed physical address space.

When the identity number identifies the first apparatus, the translation request sent by the accessing end to the accessed end carries the global identity number of the accessed end. The global identity number of the accessed end identifies the identity of the accessed end. When the identity number identifies the second apparatus, the translation request sent by the accessing end to the accessed end carries the global identity number of the accessing end. The global identity number of the accessing end identifies the identity of the accessing end.

In FIG. 6A and FIG. 6B, the ATS mechanism in the PCIe bus is used as an example, and the translation request sent by the accessing end to the accessed end is a specific example of the physical address application request.

602: The accessed end generates a key (key_x) for the accessing end, and computes a message authentication code (Message Authentication Code, MAC).

It should be noted that, if the accessing end applies for the physical address from the accessed end for the first time, and the accessed end does not derive the key for the accessing end before, the accessed end needs to derive the key for the accessing end after receiving the translation request from the accessing end. Specifically, the accessed end derives the key based on the global identity number of the accessing end or the accessed end carried in the translation request. For example, the accessed end locally stores a root key (RotKey). When the accessing end applies for the physical address, the accessed end generates a first key for the global identity number of the accessing end or the accessed end based on the root key. A key derivation policy may be implemented by using the following algorithm:

$$\text{key\_x=fun1\_RotKey(global identity number, monotone increasing parameter)}$$

In the foregoing key derivation policy, fun1 indicates the derivation computation function, and may be the standard key derivation function, for example, the halting key derivation function (Halting Key Derivation Function, HKDF); RotKey is the root key for derivation computation; and the monotone increasing parameter may be the counter value or the system time. It should be noted that, when the accessed end updates, according to the foregoing key derivation policy, a key corresponding to a global identity number, the counter value needs to be changed or new system time needs to be invoked to generate a new key, to prevent a same key from being obtained through the two times of consecutive derivation computation.

Further, the accessed end further performs, based on a specific granularity, cryptographic security mathematical computation, for example, a symmetric block encryption (AES-CMAC) algorithm that is secure enough, on physical address space that is permitted to be accessed by the accessing end. Specifically, the accessed end determines, for the accessing end, the granularity of the physical address space of the accessed end, a most significant bit (namely, a most significant bit of the physical address) obtained after the physical address is aligned based on the granularity of the physical address space, and a permission value A corresponding to each physical address space segment in the physical address space. The granularity of the physical address space may be an encoded value of the granularity. Any permission value A indicates a first access permission of the accessing end for a physical address space segment corresponding to the permission value A, and the any permission value A may be an encoded value of the first access permission corresponding to the physical address space segment. In addition, the accessed end further performs cryptographic security mathematical computation based on the first key, to obtain a corresponding security check value.

In an example, the security check value is the MAC. The MAC is computed as follows:

$$\text{MAC=fun2\_key\_x(range\_x, pa\_align, pert\_x)}$$

In the foregoing computation formula of the MAC, fun2 indicates the digest computation function, and may be the standard digest computation function like the secure hash algorithm (Secure Hash Algorithm, SHA)-2; key_x is the key, for example, the first key, and the key needs to be used as the operator when fun2 is computed; range_x indicates the granularity of the physical address space, and range_x may be the encoded value; pa align indicates the most significant bit obtained after the physical address is aligned based on the granularity of the physical address space; and pert_x indicates a permission value A corresponding to a physical address space segment, and pert_x may be the encoded value.

Optionally, the accessed end may further establish a lightweight region table of the physical address space based on the global identity number of the accessing end or the accessed end. Each entry of the region table needs only a few bits, and each entry is used to store a second access permission for a physical address space segment indicated by a corresponding region number. The region table is a continuous and span-controllable lightweight table. Each entry of the region table may be continuously allocated and used, and is not bound to the specific physical address. In this way, a case in which the entry of the region table may need to be used but cannot be used because the physical address space is discrete is not caused. In this application, the region table may be or may not be established selectively.

As shown in FIG. 6A and FIG. 6B, N physical address space segments included in physical address space opened by the accessed end to the accessing end are a physical address space segment PA 0, a physical address space segment PA 1, a physical address space segment PA 2, and a physical address space segment PA 3. The region table includes the physical address space segment PA 0, the physical address space segment PA 1, the physical address space segment PA 2, and the physical address space segment PA 3. Range indexes (range indexes) corresponding to the physical address space segment PA 0, the physical address space segment PA 1, the physical address space segment PA 2, and the physical address space segment PA 3 are sequentially 0 to 3. The physical address space segment PA 0, the physical address space segment PA 1, the physical address space segment PA 2, and the physical address space segment PA 3 correspond to permission values B. Any permission value B indicates a second access permission for a corresponding physical address space segment.

In an example, when the region table includes a permission value B corresponding to a physical address space segment, an input parameter for computing a MAC corresponding to the physical address space segment further includes the permission value B corresponding to the physical address space segment. Details are as follows:

$$\text{MAC=fun2\_key\_x(range\_x, pa\_align, pert\_x, range index)}$$

In the foregoing computation formula of the MAC, the range index indicates a range index corresponding to the physical address space segment in the region table established by the accessed end. Meanings of other parameters are described above.

It should be understood that, for the physical address space segment PA 0, the physical address space segment PA 1, the physical address space segment PA 2, and the physical address space segment PA 3, the accessed end may separately obtain corresponding MACs through computation according to a same method.

It should be noted that the region table in FIG. 6A and FIG. 6B is optionally implemented in this application, and a corresponding entry of the table optionally stores or does not store a permission value B of a physical address space segment. In addition, the security check value obtained through computation in FIG. 6A and FIG. 6B is the MAC. Persons skilled in the art should understand that the security check value in this application may be not only the MAC, but also another.

603: The accessed end sends a translation response (Translation Response) to the accessing end.

In FIG. 6A and FIG. 6B, the ATS mechanism in the PCIe bus is used as an example, and the translation response sent by the accessed end to the accessing end is a specific example of the first response to the physical address application request.

The translation response includes a granularity of the physical address space opened by the accessed end to the accessing end, a physical address space segment (for example, the physical address space segment PA 0, the physical address space segment PA 1, the physical address space segment PA 2, and the physical address space segment PA 3) opened by the accessed end to the accessing end, and MACs (for example, the MACs corresponding to the physical address space segment PA 0, the physical address space segment PA 1, the physical address space segment PA 2, and the physical address space segment PA 3) corresponding to physical address space segments opened by the accessed end to the accessing end. Optionally, when the physical address space segments opened by the accessed end to the accessing end correspond to permission values B in the region table, the translation response further includes range indexes (for example, range indexes 0 to 3 that correspond to the physical address space segment PA 0, the physical address space segment PA 1, the physical address space segment PA 2, and the physical address space segment PA 3) corresponding to the physical address space segments.

It should be noted that, in FIG. 6A and FIG. 6B, the accessing end actively initiates the physical address application request to the accessed end, which is only a possible implementation. Alternatively, the accessed end may actively synchronize the translation response in FIG. 6A and FIG. 6B to the accessing end (for example, a conventional address translation mode in an NVLink), and the accessing end does not need to actively send the translation request. This may not be limited herein.

604: The accessing end sends an access request (Access Request) to the accessed end.

For example, the accessing end sends a first access request to the accessed end. A first physical address space segment requested by the first access request for access is the physical address space segment PA 0. The first access request includes the global identity number of the accessing end or the accessed end, a first security check value (the MAC corresponding to the physical address space segment PA 0), a first physical address (a physical address in the physical address space segment PA 0), and the granularity of the physical address space opened by the accessed end to the accessing end. Optionally, the first access request further includes a first range index (a range index 0 that corresponds to the physical address space segment PA 0 in the region table established by the accessed end).

605: The accessed end performs security verification.

After receiving the access request from the accessing end, the accessed end performs different security verification processes based on whether the access request carries the range index of the region table. Details are as follows:

Case 1: The access request does not carry the range index of the region table.

The key (key_x) is obtained through indexing based on the global identity number carried in the access request. The most significant bit (pa_align) of an aligned physical address is obtained based on the granularity (range_x) of the physical address space and the physical address that are carried in the access request, and a permission value A (pert_x) corresponding to a physical address space segment to be accessed by using the access request is obtained. Then, cryptographic security mathematical computation is performed based on key_x and by using {range_x, pa align, pert_x} as an input parameter, to obtain MAC_x1 and MAC_x2. MAC_x1 and MAC_x2 are computed as follows:

$$MAC\_x1 = fun2\_key\_x(range\_x, pa\_align, pert\_x1)$$

$$MAC\_x2 = fun2\_key\_x(range\_x, pa\_align, pert\_x2)$$

Herein, pert_x includes pert_x1 and pert_x2, pert_x1 and pert_x2 are respectively two cases of a permission value A that corresponds to the current access request and that is obtained based on a type of the current access request. A second permission indicated by pert_x1 is read-only and both read and write. A second permission indicated by pert_x2 is write-only and both read and write. In an example, the access request may also carry pert_x1 and pert_x2, so that the accessed end does not need to obtain pert_ x1 and pert_x2 through computation.

It should be noted that, for the two cases in which the first access permission is read-only and both read and write and the first access permission is write-only and both read and write, corresponding security check values, for example, pert_x1 and pert_x2, are computed. Beneficial effects that are brought include: The access request may not need to carry a permission, to reduce packet overheads of the access request, and the accessed end does not need to check the permission before starting computation, to reduce a verification delay. It should be understood that a specific implementation may be flexibly implemented, and is not limited to the case described herein.

It should be further noted that the accessed end obtains two values by performing cryptographic security mathematical computation, which are respectively MAC_x1 and MAC _x2, and MAC_x1 and MAC_x2 respectively correspond to two possible values of pert_x. The accessed end verifies MAC_x1 and MAC_x2 that are locally obtained through computation with the MAC carried in the access request, and if any one of MAC_x1 and MAC_x2 is verified successfully with the MAC carried in the access request, verification succeeds, and access is permitted. Otherwise, verification fails, and access is blocked. It should be understood that verifying two MACs means comparing the two MACs. If the two MACs are equal, it indicates that comparison succeeds, that is, verification succeeds.

For example, in the example shown in FIG. 6A and FIG. 6B, the first key is obtained through indexing based on the global identity number of the accessing end or the global identity number of the accessed end. The most significant bit of the physical address in the physical address space segment PA 0 and the permission value A of the physical address space segment PA 0 are determined based on the physical address in the physical address space segment PA 0 and the granularity of the physical address space opened by the accessed end to the accessing end. A second security check value is obtained through computation based on the granularity of the physical address space opened by the accessed end to the accessing end, the most significant bit of the physical address in the physical address space segment PA 0, the permission value A of the physical address space segment PA 0, and the first key. For example, there are two second security check values, which are respectively MAC_x1 corresponding to read-only and both read and write and MAC_x2 corresponding to write-only and both read and write. The MAC corresponding to the physical address space segment PA 0 carried in the first access request is separately verified with MAC_x1 and MAC_x2. As long as one of MAC_x1 and MAC_x2 is verified successfully with the MAC corresponding to the physical address space segment PA 0 carried in the first access request, it is considered that verification succeeds, and the accessing end is permitted to access the physical address space segment PA 0.

Case 2: The access request carries the range index of the region table.

(1) The key (key_x) is obtained through indexing based on the global identity number carried in the access request. The most significant bit (pa_align) of an aligned physical address is obtained based on the granularity (range_x) of the physical address space and the physical address that are carried in the access request, and a permission value A (pert_x) corresponding to a physical address space segment to be accessed by using the access request is obtained. Then, cryptographic security mathematical computation is performed based on key_x and by using {range_x, pa_align, pert_x, range index} as an input parameter, to obtain MAC_x1 and MAC_x2. MAC_x1 and MAC_x2 are computed as follows:

$$MAC\_x1 = fun2\_key\_x(range\_x, pa\_align, pert\_x1, range\ index)$$

$$MAC\_x2 = fun2\_key\_x(range\_x, pa\_align, pert\_x2, range\ index)$$

The range index in the input parameter is the range index carried in the access request. Descriptions of other input parameters are the same as those in a case in which the access request does not carry the range index of the region table.

The accessed end verifies MAC_x1 and MAC_x2 that are locally obtained through computation with the MAC carried in the access request. If any one of MAC_x1 and MAC_x2 is verified unsuccessfully with the MAC carried in the access request, verification fails, and access is blocked. Otherwise, subsequent verification is performed.

(2) A permission value B of a corresponding entry is indexed in the region table based on the range index carried in the access request, and then the permission value B obtained through indexing is used to determine whether access is permitted. If the permission value B is access permitted, access is permitted. Otherwise, access is blocked. If the access request is read, the permission value B obtained through indexing is considered as access permitted at least when read is permitted. If the access request is write, the permission value B obtained through indexing is considered as access permitted at least when write is permitted.

Local memory space is permitted to be accessed only when the MAC carried in the access request is verified successfully with the MAC locally obtained by the accessed end through computation and the permission value B obtained through indexing based on the range index carried in the access request is access permitted. Otherwise, local memory space is unpermitted to be accessed.

For example, in the example shown in FIG. 6A and FIG. 6B, the first key is obtained through indexing based on the global identity number of the accessing end. The most significant bit of the physical address in the physical address space segment PA 0 and the permission value A of the physical address space segment PA 0 are determined based on the physical address in the physical address space segment PA 0 and the granularity of the physical address space opened by the accessed end to the accessing end. A second security check value is obtained through computation based on the granularity of the physical address space opened by the accessed end to the accessing end, the most significant bit of the physical address in the physical address space segment PA 0, the permission value A of the physical address space segment PA 0, the range index 0 carried in the first access request, and the first key. For example, there are two second security check values, which are respectively MAC_x1 corresponding to read-only and both read and write and MAC_x2 corresponding to write-only and both read and write. The MAC corresponding to the physical address space segment PA 0 carried in the first access request is separately verified with MAC_x1 and MAC_x2. In addition, indexing is performed in the region table based on the range number 0 carried in the first access request. When one of MAC_x1 and MAC_x2 is verified successfully with the MAC corresponding to the physical address space segment PA 0 carried in the first access request, and a permission value B obtained through indexing by using the range number 0 is access permitted, it is considered that verification succeeds, and the accessing end is permitted to access the physical address space segment PA 0.

It should be noted that, for related descriptions of the memory access method described in FIG. 6A and FIG. 6B, refer to the related descriptions in the embodiments shown in FIG. 1 to FIG. 5. Details are not described herein again. In an example, the accessing end and the accessed end shown in FIG. 6A and FIG. 6B are respectively a second apparatus and a first apparatus.

2. Physical address invalidation procedure

Case 1: There is no region table.

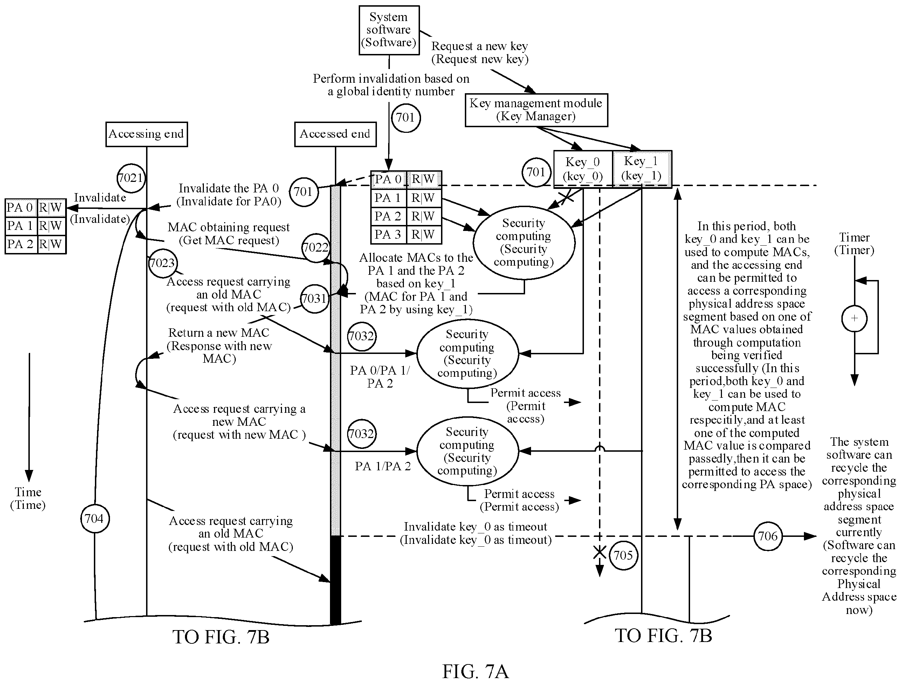

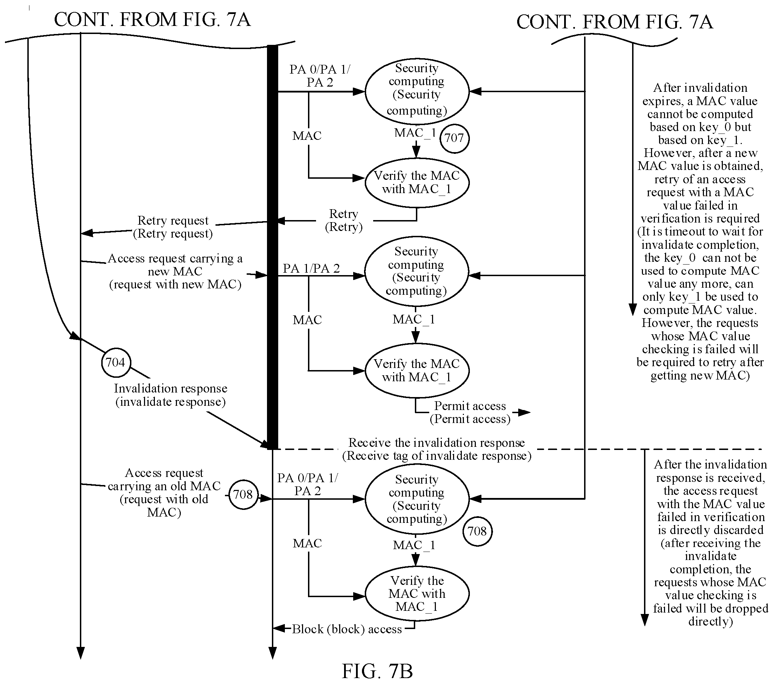

FIG. 7A and FIG. 7B are a schematic flowchart of a possible implementation example of invalidating the physical address space segment in the embodiment shown in FIG. 5. It should be understood that a procedure of invalidating the physical address space segment shown in FIG. 7A and FIG. 7B may also be performed based on the embodiment shown in FIG. 6A and FIG. 6B. The procedure of invalidating the physical address space segment shown in FIG. 7A and FIG. 7B includes but is not limited to the following steps or operations.

701: The system software invalidates the physical address space segment based on a global identity number, and the accessed end sends an invalidation command to the accessing end.

Specifically, the system software on the accessed end needs to invalidate one page table or some page tables corresponding to the global identity number, so that a corresponding physical address space segment and another subsequent action can be recycled.

As shown in FIG. 7A and FIG. 7B, a physical address space segment that is opened by the accessed end to the accessing end corresponding to the global identity number includes a physical address space segment PA 0, a physical address space segment PA 1, and a physical address space segment PA 2. The system software needs to recycle an access permission, for the physical address space segment PA 0, of the accessing end corresponding to the global identity number, that is, invalidate the physical address space segment PA 0. Before the physical address space segment PA 0 is invalidated, a first key derived by a key management module for the global identity number is key_0 (key_0). If the physical address space segment PA 0 needs to be invalidated, the system software rederives a new key, that is, a second key, for the global identity number by using the key management module. For example, the second key is key_1 (key_1). Similarly, key_0 can be used only for verification. For example, a local PAAPC module of the accessed end marks that old key_0 can be used only for verification and is no longer used for computing a MAC. In addition, the system software sends, by using the PAAPC module, the invalidation command to the accessing end corresponding to the global identity number. The invalidation command notifies the accessing end to invalidate an address mapping of the physical address space segment PA 0 locally cached by the accessing end.

7021: After receiving the invalidation command, the accessing end invalidates an address mapping.

Optionally, after receiving the invalidation command, the accessing end may stop sending an access request for the invalidated physical address space segment.

After receiving the invalidation command, the accessing end parses the invalidation command to learn invalidation of a locally stored corresponding address mapping relationship, and no longer sends the access request for the invalidated physical address space segment. For example, the accessed end notifies the accessing end to invalidate the physical address space segment PA 0, and the accessing end no longer sends an access request for the physical address space segment PA 0 to the accessed end.

It should be noted that, for an access request that is sent and cannot be blocked (inflight) and that is for the invalidated physical address space segment (for example, the physical address space segment PA 0), the accessing end needs to ensure the following:

(1) For read, waiting for return of all completion packets is performed or data pollution can be marked, and all subsequently returned completion packets of access to the invalidated physical address space segment (for example, the physical address space segment PA 0) are all discarded.

(2) For write, a response to the invalidation command returned by the accessing end to the accessed end and all previous access requests for the invalidated physical address space segment (for example, the physical address space segment PA 0) need to be order-preserved, and the returned response to the invalidation command can drain (drain) all access requests for the invalidated physical address space segment (for example, the physical address space segment PA 0) on the interconnect bus between the accessing end and the accessed end.

7022: The accessing end sends a MAC obtaining request to the accessed end.

Specifically, because the new key is derived, then security check is performed based on the new key. To ensure that a physical address space segment that is not invalidated can still be normally accessed, a new MAC needs to be obtained for the physical address space segment that is not invalidated. The new MAC is computed based on the new key.

For example, the accessing end sends a MAC obtaining request to the accessed end, to obtain a new MAC corresponding to the physical address space segment PA 1. The MAC obtaining request includes the global identity number, a physical address (for example, a base address) in the physical address space segment PA 1, a granularity (range_x) of the physical address space, and an old MAC corresponding to the physical address space segment PA 1.

For another example, the accessing end sends a MAC obtaining request to the accessed end, to obtain a new MAC corresponding to the physical address space segment PA 2. The MAC obtaining request includes the global identity number, a physical address (for example, a base address) in the physical address space segment PA 2, a granularity (range_x) of the physical address space, and an old MAC corresponding to the physical address space segment PA 2.

7023: The accessing end sends, to the accessed end, an access request carrying an old MAC.

For access to the physical address space segment that is not invalidated, the accessing end may continue to initiate an access request. However, in this case, the accessing end may optionally suspend or appropriately reduce access traffic of a corresponding data stream, to reduce computation pressure of the accessed end.

For example, for access to the physical address space segment PA 1, the accessing end sends, to the accessed end, an access request carrying the old MAC corresponding to the physical address space segment PA 1. For access to the physical address space segment PA 2, the accessing end may also send, to the accessed end, an access request that carries the old MAC corresponding to the physical address space segment PA 2.

The access request carrying the old MAC further carries the global identity number, a physical address that needs to be accessed, the granularity of the physical address space, and an old MAC corresponding to a physical address space segment in which the physical address that needs to be accessed is located.

For example, the access request used to access the physical address space segment PA 1 carries the global identity number, the physical address in the physical address space segment PA 1, the granularity of the physical address space, and the old MAC corresponding to the physical address space segment PA 1.

For another example, the access request used to access the physical address space segment PA 2 carries the global identity number, the physical address in the physical address space segment PA 2, the granularity of the physical address space, and the old MAC corresponding to the physical address space segment PA 2.

It can be learned from the foregoing descriptions that, before the accessing end returns the response to the invalidation command, or before the local invalidation command of the accessed end expires, a request received by the accessed end from the accessing end may include (1) the MAC obtaining request and (2) the access request carrying the old MAC. In addition, after the accessed end returns the new MAC to the accessing end, and before the accessing end does not returns the response to the invalidation command or before the local invalidation command of the accessed end expires, a request received by the accessed end from the accessing end may further include the access request carrying the old MAC. Consequently, before the accessing end returns the response to the invalidation command, or before the local invalidation command of the accessed end expires, the accessed end needs to be capable of performing at least the following steps or operations.

7031: The accessed end returns the new MAC to the accessing end.

After the MAC obtaining request from the accessing end is received, for any physical address space segment whose corresponding MAC needs to be re-obtained, the accessed end first computes, based on an old key and information carried in the MAC obtaining request, MAC_0 for the physical address space segment, and then verifies MAC_0 obtained through computation for the physical address space segment with the MAC that corresponds to the physical address space segment and that is carried in the MAC obtaining request. The accessed end determines whether the physical address space segment is to be invalidated. The accessed end computes a new MAC for the physical address space segment based on the new key and returns the new MAC to the accessing end only when verification succeeds and the physical address space segment is not to be invalidated.

For example, for the physical address space segment PA 1, the MAC obtaining request includes the global identity number, the physical address in the physical address space segment PA 1, the granularity of the physical address space, and the old MAC corresponding to the physical address space segment PA 1. The accessed end first obtains key_0 through indexing based on the global identity number carried in the MAC obtaining request, next, obtains MAC_0 through computation for the physical address space segment PA 1 based on the physical address in the physical address space segment PA 1, the granularity of the physical address space, and key_0, and then verifies MAC_0 obtained through computation for the physical address space segment PA 1 with the old MAC corresponding to the physical address space segment PA 1 carried in the MAC obtaining request. If MAC_0 obtained through computation for the physical address space segment PA 1 is equal to the old MAC corresponding to the physical address space segment PA 1 carried in the MAC obtaining request, and the accessed end determines that the physical address space segment PA 1 is not to be invalidated, the accessed end obtains, through computation based on the physical address in the physical address space segment PA 1, the granularity of the physical address space, and key_1, the new MAC corresponding to the physical address space segment PA 1, and returns, to the accessing end, the new MAC corresponding to the physical address space segment PA 1.

Similarly, for the physical address space segment PA 2, the MAC obtaining request includes the global identity number, the physical address in the physical address space segment PA 2, the granularity of the physical address space, and the old MAC corresponding to the physical address space segment PA 2. The accessed end first obtains key_0 through indexing based on the global identity number carried in the MAC obtaining request, next, obtains MAC_0 through computation for the physical address space segment PA 2 based on the physical address in the physical address space segment PA2, the granularity of the physical address space, and key_0, and then verifies MAC_0 obtained through computation for the physical address space segment PA 2 with the old MAC corresponding to the physical address space segment PA 2 carried in the MAC obtaining request. If MAC_0 obtained through computation for the physical address space segment PA 2 is equal to the old MAC corresponding to the physical address space segment PA 2 carried in the MAC obtaining request, and the accessed end determines that the physical address space segment PA 2 is not to be invalidated, the accessed end obtains, through computation based on the physical address in the physical address space segment PA2, the granularity of the physical address space, and key_1, the new MAC corresponding to the physical address space segment PA 2, and returns, to the accessing end, the new MAC corresponding to the physical address space segment PA 2.

7032: The accessed end determines, based on the old MAC and the new MAC, an access permission corresponding to a received access request.

Before the accessing end returns the response to the invalidation command, or before the local invalidation command of the accessed end expires, the access request (namely, the second access request) is received. The accessed end chooses to separately perform access permission verification on the access request based on the old key and the new key. To be specific, MACs are separately commutated based on the old key and the new key. The access request is access permitted provided that the MAC commutated based on either of the old key and the new key is verified successfully with the MAC carried in the access request.

For example, the access request used to access the physical address space segment PA 1 carries the global identity number, the physical address in the physical address space segment PA 1, the granularity of the physical address space, and the old MAC or the new MAC corresponding to the physical address space segment PA 1. MAC_0 is obtained through computation for the physical address space segment PA 1 based on the physical address in the physical address space segment PA 1, the granularity of the physical address space, and key_0. MAC_1 is obtained through computation for the physical address space segment PA 1 based on the physical address in the physical address space segment PA 1, the granularity of the physical address space, and key_1. The physical address space segment PA 1 is permitted to be accessed provided that any one of MAC_0 obtained through computation for the physical address space segment PA 1 based on key_0 and MAC_1 obtained through computation for the physical address space segment PA 1 based on key_1 is verified successfully with the MAC (the old MAC or the new MAC corresponding to the physical address space segment PA 1) carried in the access request.

For another example, the access request used to access the physical address space segment PA 2 carries the global identity number, the physical address in the physical address space segment PA 2, the granularity of the physical address space, and the old MAC or the new MAC corresponding to the physical address space segment PA 2. MAC_0 is obtained through computation for the physical address space segment PA 2 based on the physical address in the physical address space segment PA 2, the granularity of the physical address space, and key_0. MAC_1 is obtained through computation for the physical address space segment PA 2 based on the physical address in the physical address space segment PA 2, the granularity of the physical address space, and key_1. The physical address space segment PA 2 is permitted to be accessed provided that the any one of MAC_0 obtained through computation for the physical address space segment PA 2 based on key_0 and MAC_1 obtained through computation for the physical address space segment PA 2 based on key_1 is verified successfully with the MAC (the old MAC or the new MAC corresponding to the physical address space segment PA 2) carried in the access request.

704: The accessing end sends the response to the invalidation command to the accessed end.

Before determining to return the response to the invalidation command to the accessed end, the accessing end needs to ensure that a corresponding new MAC is obtained for a physical address space segment that is not invalidated and that needs to be accessed subsequently. Then, the accessing end may return the response to the invalidation command to the accessed end.

For example, the physical address space segment PA 1 and the physical address space segment PA 2 are not to be invalidated, and the accessing end further accesses the physical address space segment PA 1 and the physical address space segment PA 2 subsequently. In this case, the accessing end returns the response to the invalidation command to the accessed end after the accessing end obtains the new MAC corresponding to the physical address space segment PA 1 and the new MAC corresponding to the physical address space segment PA 2.

705: After receiving the response to the invalidation command from the accessing end, the accessed end no longer uses the old key.

After receiving the response to the invalidation command from the accessing end, the accessed end needs to perform order-preserving, to ensure that a response packet of the invalidation command can drain (drain) all previous response packets of the invalidation command that need to be order-preserved. After completing order-preserving, the accessed end disables a function of verifying the old key (for example, key_0), no longer uses the old key to perform cryptographic mathematical computation and verification for any physical address security protection operation, and reports the response to the invalidation command to the system software.

706: After the invalidation command expires, the accessed end no longer uses the old key.

If the local invalidation command expires before the accessed end receives the response to the invalidation command from the accessing end, the accessed end may directly disable the function of verifying the old key (for example, key_0), and no longer use the old key to perform cryptographic security mathematical computation and verification of the any physical address security protection operation. Optionally, the accessed end may not perform expiration of the invalidation command, and only after receiving the response to the invalidation command from the accessing end, disables the function of verifying the old key, and reports the response to the invalidation command to the system software. Then, the system software may recycle the corresponding physical address space segment, for example, the physical address space segment PA 0.

707: After the invalidation command expires, and before the response to the invalidation command from the accessing end is received, the accessed end sends a retry request to the accessing end for the received access request carrying the old MAC; and the accessed end normally performs security verification on a received access request carrying the new MAC.

After the invalidation command expires, the old key is disabled, and only the new key is enabled. When the access request carries the old MAC, the old MAC is computed based on the old key, and security verification computed based on the new key cannot succeed. Therefore, the accessed end returns the retry request to the accessing end, so that the accessing end carries the new MAC in a next access request. It should be noted that the retry request is sent optionally, and the accessed end may not return the retry request to the accessing end, and directly block current access. When the access request carries the new MAC, the new MAC is obtained through computation based on the new key. Therefore, security verification computed based on the new key can succeed.

For example, after the invalidation command expires, key_0 is disabled, and only the key _1 is enabled. For access to any one of the physical address space segment PA 0, the physical address space segment PA 1, and the physical address space segment PA 2, if the access request carries the old MAC, for the access request, the accessed end obtains MAC_1 through computation based on key_1. If MAC_1 is not equal to the old MAC carried in the access request, access is unpermitted, and the accessed end sends the retry request to the accessing end. However, for access to any one of the physical address space segment PA 1 and the physical address space segment PA 2, if the access request carries the new MAC, for the access request, the accessed end obtains MAC_1 through computation based on the key_1. If MAC_1 is equal to the new MAC carried in the access request, access is permitted.

708: After receiving the response to the invalidation command from the accessing end, the accessed end directly blocks the received access request carrying the old MAC.

After a physical address space segment is invalidated, an old key is disabled. If the accessing end still sends an access request for accessing the invalidated physical address space segment (for example, the physical address space segment PA 0), and the access request carries an old MAC. In this case, the accessed end obtains MAC_1 through computation based on a new key (for example, key_1), and then verifies MAC_1 with the carried old MAC, and verification fails, to prevent current access. Similarly, even if the accessing end sends an access request for accessing the physical address space segment (for example, the physical address space segment PA 1 or the physical address space segment PA 2) that is not invalidated, and the access request carries the old MAC, verification fails, and access is blocked. However, if the accessing end sends the access request for the physical address space segment (for example, the physical address space segment PA 1 or the physical address space segment PA 2) that is not invalidated, and the access request carries the new MAC, the accessed end obtains MAC_1 through computation based on the new key (for example, key_1), and then verifies MAC_1 with the carried new MAC, and verification succeeds, to permit, by using the access request, access to the physical address space segment that is not invalidated.

Optionally, MAC_0 shown in FIG. 7A and FIG. 7B includes MAC_x1_0 and MAC_x2_0. MAC_x1_0 corresponds to read-only and both read and write, and MAC_x2_0 corresponds to write-only and both read and write. If any one of MAC_x1_0 and MAC_x2_0 is verified successfully with a MAC sent by the accessing end, it indicates that verification succeeds. In addition, MAC_1 shown in FIG. 7A and FIG. 7B includes MAC_x1_1 and MAC_x2_1. MAC_x1_1 corresponds to read-only and both read and write, and MAC_x2_1 corresponds to write-only and both read and write. If any one of MAC_x1_1 and MAC_x2_1 is verified successfully with the MAC sent by the accessing end, it indicates that verification succeeds. For specific descriptions, refer to the description of the embodiment shown in FIG. 6A and FIG. 6B.

It should be noted that, in the foregoing process, any access request that is sent by another accessing end or the accessing end and that is not the global identity number can be normally verified, and is not affected.

It should be further noted that the foregoing procedure steps or operations are not necessarily strictly performed in the foregoing sequence, and some of the procedure steps or operations may be performed in parallel. For a specific procedure described in FIG. 7A and FIG. 7B, refer to the related descriptions in the embodiments shown in FIG. 1 to FIG. 6B. Details are not described herein. In an example, the accessing end and the accessed end that are shown in FIG. 7A and FIG. 7B are respectively the second apparatus and the first apparatus.

Case 2: There is a region table.

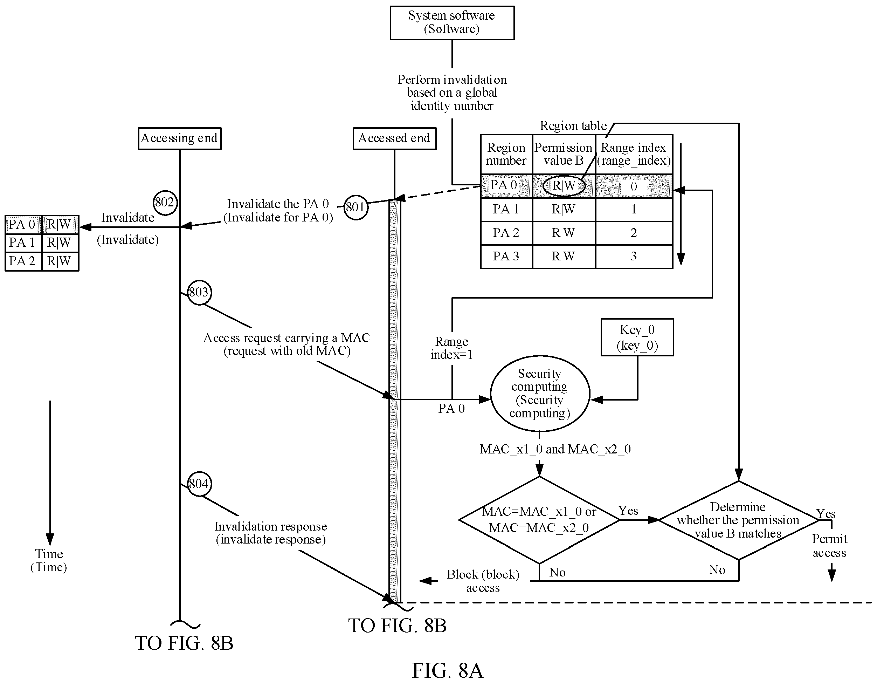

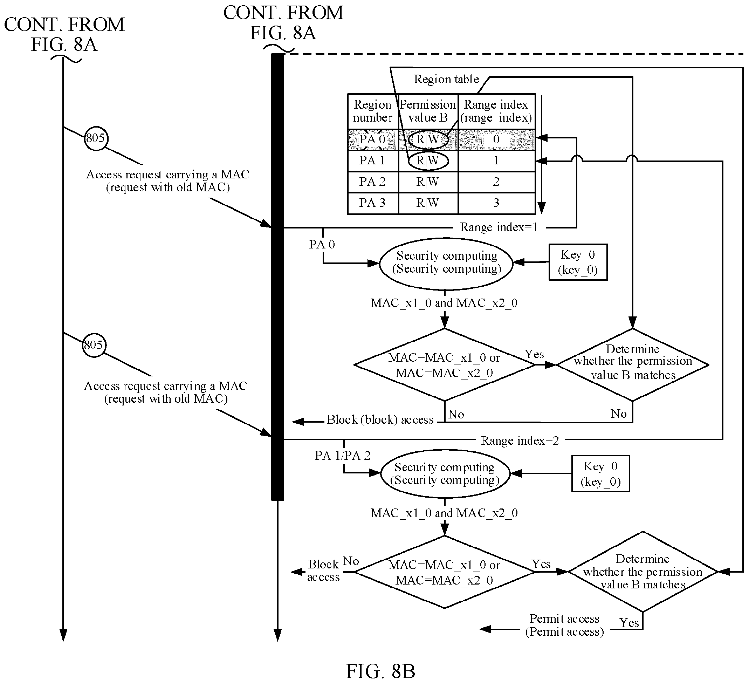

FIG. 8A and FIG. 8B are a schematic flowchart of another possible implementation example of invalidating the physical address space segment in the embodiment shown in FIG. 5. It should be understood that a procedure of invalidating the physical address space segment shown in FIG. 8A and FIG. 8B may also be performed based on the embodiment shown in FIG. 6A and FIG. 6B. The procedure of invalidating the physical address space segment shown in FIG. 8A and FIG. 8B includes but is not limited to the following steps or operations.

801: The system software invalidates the physical address space segment based on a global identity number, and the accessed end sends an invalidation command to the accessing end.

Specifically, the system software on the accessed end needs to invalidate one page table or some page tables corresponding to the global identity number, so that a corresponding physical address space segment and another subsequent action can be recycled.

If the invalidated physical address space segment has a corresponding entry in the local region table of the accessed end, a permission value B of the corresponding entry in the local region table is directly modified, so that the permission value B accords with an access permission of the global identity number expected by the system software for the physical address space segment, without reapplying for a new key or switch the old key to the new key.

Optionally, the accessed end may even choose to first send an invalidation command to notify the accessing end to invalidate the physical address space segment, after a specific period of time, modify the permission value B of the corresponding entry in the local region table, and then notify the system software that invalidation is completed. Further optionally, the system software may control whether the accessed end needs to wait for time, a waiting time, and the like.

Optionally, the accessed end may also choose to send the invalidation command to notify the accessing end, to notify the accessing end of invalidated address mapping content, and notify the accessing end that a request for obtaining a new security check value (for example, a MAC) does not need to be resent.

For example, the system software needs to invalidate a physical address space segment PA 0. The accessed end sends an invalidation command to the accessing end, to notify the accessing end to invalidate an address mapping of the physical address space segment PA 0.

802: After receiving the invalidation command, the accessing end invalidates an address mapping.

Optionally, after receiving the invalidation command, the accessing end may stop sending an access request for the invalidated physical address space segment.

For example, the accessing end receives an invalidation command for invalidating the physical address space segment PA 0, to invalidate the address mapping of the physical address space segment PA 0.

803: Before receiving a response to the invalidation command, the accessed end receives, from the accessing end, an access request carrying a MAC.

After receiving the invalidation command, if the accessing end continues to send an access request for accessing the invalidated physical address space segment, for the access request, the accessed end may still make verification succeed because the accessed end does not modify the permission value B of the entry corresponding to the invalidated physical address space segment in the region table and needs to wait until the accessing end returns the response to the invalidation command or the invalidation command expires and then the accessed end modifies the permission value B of the entry corresponding to the invalidated physical address space segment in the region table. In this case, the access request for the invalidated physical address space segment sent by the accessing end may still succeed in verification by the accessed end, and the accessing end is permitted to access the invalidated physical address space segment.

The access request carries the global identity number, a physical address that needs to be accessed, the granularity of physical address space, a MAC corresponding to a physical address space segment in which the physical address that needs to be accessed is located, and a range index corresponding to the physical address space segment in the region table.

For example, the accessed end receives, from the accessing end, an access request for accessing the physical address space segment PA 0. The access request includes the global identity number, a physical address in the physical address space segment PA 0, the granularity of the physical address space, a MAC corresponding to the physical address space segment PA 0, and a range index (namely, the first range index) corresponding to the physical address space segment PA 0 in the region table. The range index corresponding to the physical address space segment PA 0 is 1. After receiving the access request, the accessed end obtains key_0 through indexing based on the global identity number, and obtains MAC_x1_0 and MAC_x2_0 through computation for the physical address space segment PA 1 based on the physical address in the physical address space segment PA 0, the granularity of the physical address space, the range index corresponding to the physical address space segment PA 0 in the region table, and key_0. MAC_x1_0 corresponds to read-only and both read and write, and MAC_x2_0 corresponds to write-only and both read and write. If any one of MAC_x1_0 and MAC_x2_0 is verified successfully with (equal to) a MAC sent by the accessing end, it indicates that the verification succeeds. In addition, the accessed end further obtains, through indexing in the region table based on the range index that corresponds to the physical address space segment PA 0 and that is carried in the access request, the permission value B corresponding to the physical address space segment PA 0, and determines whether the permission value B corresponding to the physical address space segment PA 0 matches, that is, determines whether the permission value B corresponding to the physical address space segment PA 0 is access permitted. If one of MAC_x1_0 and MAC_x2_0 that are obtained through computation for the physical address space segment PA 1 is verified successfully with (equal to) the MAC that corresponds to the physical address space segment PA 0 and that is carried in the access request, and the permission value B that corresponds to the physical address space segment PA 0 and that is obtained through indexing in the region table is access permitted, the physical address space segment PA 0 is permitted to be accessed.

804: The accessed end receives the response to the invalidation command from the accessing end.

After invalidating the address mapping of the invalidated physical address space segment, the accessing end sends the response to the invalidation command to the accessed end. After receiving the response to the invalidation command, the accessed end modifies the permission value B of the entry corresponding to the invalidated physical address space segment in the region table, or directly deletes the entry corresponding to the invalidated physical address space segment in the region table.

For example, the physical address space segment PA 0 is invalidated. After receiving the response to the invalidation command, the accessed end modifies the permission value B of the entry corresponding to the physical address space segment PA 0 in the region table, or directly deletes an entry corresponding to the physical address space segment PA 0 in the region table.

805: After receiving the response to the invalidation command, the accessed end receives, from the accessing end, an access request carrying a MAC.

For the access request carrying the MAC received after the response to the invalidation command is received, if the access request is used to request to access the invalidated physical address space segment, even if the MAC carried in the access request can be verified successfully, the access request is unpermitted to be used to access the invalidated physical address space segment because the permission value B of the entry corresponding to the invalidated physical address space segment in the region table is modified or the entry corresponding to the invalidated physical address space segment in the region table is deleted. In this way, the accessing end is prevented from accessing the physical address space segment PA 0, to protect security of the physical address space of the accessed end. If the access request is used to request to access a physical address space segment that is not invalidated, the access may be normally performed.

For example, after receiving a response to the invalidation command for the physical address space segment PA 0, the accessed end receives an access request for accessing the physical address space segment PA 0. The access request includes the global identity number, a physical address in the physical address space segment PA 0, the granularity of the physical address space, the MAC corresponding to the physical address space segment PA 0, and the range index corresponding to the physical address space segment PA 0 in the region table. After receiving the access request, the accessed end obtains key_0 through indexing based on the global identity number, and obtains MAC_x1_0 and MAC_x2_0 through computation for the physical address space segment PA 1 based on the physical address in the physical address space segment PA 0, the granularity of the physical address space, the range index corresponding to the physical address space segment PA 0 in the region table, and key_0. In addition, the accessed end further indexes, in the region table based on the range index that corresponds to the physical address space segment PA 0 and that is carried in the access request, the permission value B corresponding to the physical address space segment PA 0. If one of MAC_x1_0 and the MAC_x2_0 that are obtained through computation for the physical address space segment PA 1 is equal to the MAC that corresponding to the physical address space segment PA 0 and that is carried in the access request, but the permission value B corresponding to the physical address space segment PA 0 is not obtained through indexing in the region table, or the permission value B that corresponds to the physical address space segment PA 0 that is obtained through indexing in the region table is access unpermitted, access to the physical address access space segment PA 0 is blocked.

It should be noted that, in the foregoing overall process, an access request that is sent by the accessing end and that is for accessing the physical address space segment that is not invalidated may be used to perform normal access.

For example, in an overall process of invalidating the physical address space segment PA 0, the accessed end may receive an access request for accessing a physical address space segment PA 1. The access request includes the global identity number, a physical address in the physical address space segment PA 1, the granularity of the physical address space, a MAC corresponding to the physical address space segment PA 1, and a range index corresponding to the physical address space segment PA 1 in the region table. After receiving the access request, the accessed end obtains key_0 through indexing based on the global identity number, and obtains MAC_x1_0 and MAC_x2_0 through computation for the physical address space segment PA 1 based on the physical address in the physical address space segment PA 1, the granularity of the physical address space, the range index corresponding to the physical address space segment PA 1 in the region table, and key_0. In addition, the accessed end further indexes, in the region table based on the range index that corresponds to the physical address space segment PA 1 and that is carried in the access request, a permission value B corresponding to the physical address space segment PA 1. If one of MAC_x1_0 and MAC_x2_0 that are obtained through computation for the physical address space segment PA 1 is equal to the MAC that corresponds to the physical address space segment PA 1 and that is carried in the access request, and the permission value B that corresponds to the physical address space segment PA 1 and that is obtained through indexing in the region table is access permitted, the physical address space segment PA 1 is permitted to be accessed. Access to the physical address space segment PA 1 is blocked.

It should be understood that, if the invalidated physical address space segment has no corresponding entry in the region table of the accessed end, action behavior in an invalidation process is the same as that in Case 1 in which no region table is not implemented.

It should be noted that, for a specific procedure described in FIG. 8A and FIG. 8B, refer to the related descriptions in the embodiments shown in FIG. 1 to FIG. 7A and FIG. 7B. Details are not described herein again. In an example, the accessing end and the accessed end shown in FIG. 8A and FIG. 8B are respectively a second apparatus and a first apparatus.

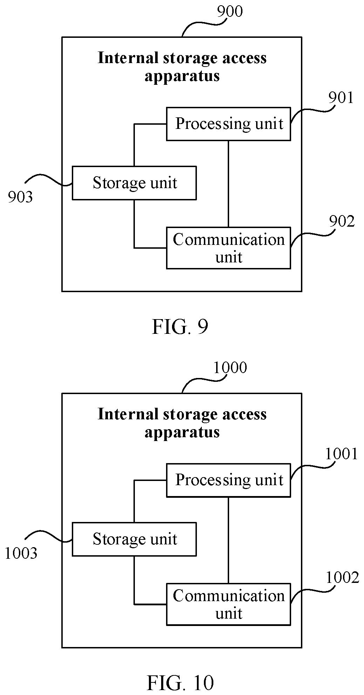

FIG. 9 is a schematic diagram of a structure of a memory access apparatus according to an embodiment of this application. The memory access apparatus 900 is applied to a first apparatus, and the memory access apparatus 900 includes a processing unit 901 and a communication unit 902. The communication unit 902 is configured to receive a first access request from a second apparatus, where the first access request includes an identity number, a first security check value, and first information, and the first information includes a first physical address. The processing unit 901 is configured to: obtain a second security check value through computation based on the identity number and the first information; and determine an access permission of the second apparatus for the first physical address based on the first security check value and the second security check value.

In a possible implementation, the identity number identifies the first apparatus, or the identity number identifies the second apparatus.

In a possible implementation, before the receiving a first access request from a second apparatus, the communication unit 902 is further configured to receive a physical address application request from the second apparatus, where the physical address application request includes the identity number. The processing unit 901 is further configured to generate a first key for the identity number. The communication unit 902 is further configured to send a first response to the physical address application request to the second apparatus, where the first response includes the first security check value and the first information, and the first security check value is obtained through computation based on the first key.

In an example, the processing unit 901 is specifically configured to: index the first key based on the identity number, and obtain the second security check value through computation based on the first key and the first information.

In a possible implementation, the first information further includes a first permission value. The first permission value indicates a first access permission of the second apparatus for the first physical address.

In a possible implementation, the first information further includes a granularity of physical address space. The granularity of the physical address space indicates a range of the physical address space. The physical address space includes the first physical address. For example, the physical address space includes a first physical address space segment. The first physical address space segment includes the first physical address.

In a possible implementation, the first permission value further indicates a first access permission of the second apparatus for the first physical address space segment.

In an example, the processing unit 901 is specifically configured to: index the first key based on the identity number; if the first information includes the first permission value, determine a most significant bit of the first physical address based on the first physical address and the granularity of the physical address space; or if the first information does not include the first permission value, determine a most significant bit of the first physical address and the first permission value based on the first physical address and the granularity of the physical address space; and obtain the second security check value through computation based on the granularity of the physical address space, the most significant bit of the first physical address, the first permission value, and the first key.

In a possible implementation, the processing unit 901 is specifically configured to: verify the first security check value with the second security check value; and if the first security check value is verified successfully with the second security check value, determine that the access permission of the second apparatus for the first physical address is access permitted.

In a possible implementation, the first security check value and the second security check value are obtained through computation based on the first key. The processing unit 901 is further configured to generate a second key for the identity number. The communication unit 902 is further configured to send an invalidation command to the second apparatus, where the invalidation command is used to invalidate the first physical address or the first physical address space segment. The processing unit 901 is further configured to replace the first key with the second key after a response to the invalidation command from the second apparatus is received or after the invalidation command expires.

In a possible implementation, after the invalidation command is sent to the second apparatus and before the response to the invalidation command is received or before the invalidation command expires, the communication unit 902 is further configured to receive a security check value obtaining request from the second apparatus, where the security check value obtaining request includes the identity number, a third security check value, and second information, the third security check value is obtained through computation based on the first key, and the second information includes a second physical address. The processing unit 901 is further configured to: obtain a fourth security check value through computation based on the identity number, the second information, and the first key; and verify the third security check value with the fourth security check value. The communication unit 902 is further configured to if the third security check value is verified successfully with the fourth security check value, send a second response to the security check value obtaining request to the second apparatus, where the second response includes a fifth security check value, and the fifth security check value is obtained through computation based on the second key.

In a possible implementation, the second information further includes a second permission value. The second permission value indicates a first access permission of the second apparatus for the second physical address.

In a possible implementation, the second information further includes the granularity of the physical address space. The granularity of the physical address space indicates the range of the physical address space. The physical address space includes the second physical address. For example, the physical address space includes a second physical address space segment. The second physical address space segment includes the second physical address.

In a possible implementation, the second permission value further indicates a first access permission of the second apparatus for the second physical address space segment.

In a possible implementation, after the invalidation command is sent to the second apparatus and before the response to the invalidation command is received or before the invalidation command expires, the communication unit 902 is further configured to receive a second access request from the second apparatus, where the second access request includes the identity number, a sixth security check value, and third information, and the third information includes a third physical address. The processing unit 901 is further configured to: obtain a seventh security check value through computation based on the identity number, the third information, and the first key, and obtain an eighth security check value through computation based on the identity number, the third information, and the second key; separately verify the sixth security check value with the seventh security check value and the eighth security check value; and if the sixth security check value is verified successfully with the seventh security check value, or the sixth security check value is verified successfully with the eighth security check value, determine that an access permission of the second apparatus for the third physical address is access permitted.

In a possible implementation, the third information further includes a third permission value. The third permission value indicates a first access permission of the second apparatus for the third physical address.

In a possible implementation, the third information further includes the granularity of the physical address space. The granularity of the physical address space indicates the range of the physical address space. The physical address space includes the third physical address. For example, the physical address space includes a third physical address space segment. The third physical address space segment includes the third physical address.

In a possible implementation, the third permission value further indicates a first access permission of the second apparatus for the third physical address space segment.

In a possible implementation, the first apparatus includes a region table. The region table includes a first range index and a fourth permission value. The first range index corresponds to the fourth permission value. The fourth permission value indicates a second access permission for the first physical address or the first physical address space segment. The first information further includes the first range index.

In an example, the processing unit 901 is specifically configured to: index the first key based on the identity number; if the first information includes the first permission value, determine a most significant bit of the first physical address based on the first physical address and the granularity of the physical address space; or if the first information does not include the first permission value, determine a most significant bit of the first physical address and the first permission value based on the first physical address and the granularity of the physical address space; and obtain the second security check value through computation based on the granularity of the physical address space, the most significant bit of the first physical address, the first permission value, the first range index, and the first key.

In a possible implementation, the processing unit 901 is specifically configured to: verify the first security check value with the second security check value; and if the first security check value is verified successfully with the second security check value, and the second access permission indicated by the fourth permission value is access permitted, determine that the access permission of the second apparatus for the first physical address is access permitted.

In a possible implementation, the processing unit 901 is further configured to modify the fourth permission value in the region table to a fifth permission value.

The memory access apparatus 900 may further include a storage unit 903, configured to store program code and data of the memory access apparatus 900. The processing unit 901 may be a processor, the communication unit 902 may be a transceiver, and the storage unit 903 may be a memory (for example, a RAM or a ROM).

It should be noted that, for an implementation of each unit of the memory access apparatus 900, refer to the corresponding descriptions of the embodiments shown in FIG. 1 to FIG. 8A and FIG. 8B, and for beneficial effects brought by the memory access apparatus 900, refer to the corresponding descriptions of the embodiments shown in FIG. 1 to FIG. 8A and FIG. 8B. Details are not described herein again.

FIG. 10 is a schematic diagram of a structure of a memory access apparatus according to an embodiment of this application. The memory access apparatus 1000 is applied to a second apparatus, and the memory access apparatus 1000 includes a processing unit 1001 and a communication unit 1002. The communication unit 1002 is configured to send a first access request to a first apparatus, where the first access request includes an identity number, a first security check value, and first information, and the first information includes a first physical address; the identity number and the first information are used to obtain a second security check value through computation; and the first security check value and the second security check value are used to determine an access permission of the second apparatus for the first physical address.

In a possible implementation, the identity number identifies the first apparatus, or the identity number identifies the second apparatus.

In a possible implementation, before the sending a first access request to a first apparatus, the communication unit 1002 is further configured to: send a physical address application request to the first apparatus, where the physical address application request includes the identity number; and receive a first response to the physical address application request from the first apparatus, where the first response includes the first security check value and the first information, the first security check value is obtained through computation based on a first key, and the first key is generated for the identity number.

In a possible implementation, the first information further includes a first permission value. The first permission value indicates a first access permission of the second apparatus for the first physical address.

In a possible implementation, the first information further includes a granularity of physical address space. The granularity of the physical address space indicates a range of the physical address space. The physical address space includes the first physical address. For example, the physical address space includes a first physical address space segment. The first physical address space segment includes the first physical address.

In a possible implementation, the first permission value further indicates a first access permission of the second apparatus for the first physical address space segment.

In a possible implementation, the communication unit 1002 is further configured to: receive an invalidation command from the first apparatus, where the invalidation command is used to invalidate the first physical address or the first physical address space; and send a response to the invalidation command to the first apparatus.

In a possible implementation, after receiving the invalidation command and before sending the response to the invalidation command, the communication unit 1002 is further configured to: send a security check value obtaining request to the first apparatus, where the security check value obtaining request includes the identity number, a third security check value, and second information, the third security check value is obtained through computation based on the first key, and the second information includes a second physical address; and receive a second response to the security check value obtaining request from the first apparatus, where the second response includes a fifth security check value, the fifth security check value is obtained through computation based on a second key, and the second key is generated for the identity number.

In a possible implementation, the second information further includes a second permission value. The second permission value indicates a first access permission of the second apparatus for the second physical address.

In a possible implementation, the second information further includes the granularity of the physical address space. The granularity of the physical address space indicates the range of the physical address space. The physical address space includes the second physical address. For example, the physical address space includes a second physical address space segment. The second physical address space segment includes the second physical address.

In a possible implementation, the second permission value further indicates a first access permission of the second apparatus for the second physical address space segment.

In a possible implementation, after receiving the invalidation command and before sending the response to the invalidation command, the communication unit 1002 is further configured to send a second access request to the first apparatus, where the second access request includes the identity number, a sixth security check value, and third information, and the third information includes a third physical address.

In a possible implementation, the third information further includes a third permission value. The third permission value indicates a first access permission of the second apparatus for the third physical address.

In a possible implementation, the third information further includes the granularity of the physical address space. The granularity of the physical address space indicates the range of the physical address space. The physical address space includes the third physical address. For example, the physical address space includes a third physical address space segment. The third physical address space segment includes the third physical address.

In a possible implementation, the third permission value further indicates a first access permission of the second apparatus for the third physical address space segment.

In a possible implementation, the first apparatus includes a region table. The region table includes a first range index and a fourth permission value. The first range index corresponds to the fourth permission value. The fourth permission value indicates a second access permission for the first physical address or the first physical address space segment. The first information further includes the first range index.

The memory access apparatus 1000 may further include a storage unit 1003, configured to store program code and data of the memory access apparatus 1000. The processing unit 1001 may be a processor, the communication unit 1002 may be a transceiver, and the storage unit 1003 may be a memory (for example, a RAM or a ROM).

It should be noted that, for an implementation of each unit of the memory access apparatus 1000, refer to the corresponding descriptions of the embodiments shown in FIG. 1 to FIG. 8A and FIG. 8B, and for beneficial effects brought by the memory access apparatus 1000, refer to the corresponding descriptions of the embodiments shown in FIG. 1 to FIG. 8A and FIG. 8B. Details are not described herein again.

An embodiment of this application further provides a memory access apparatus, including a processor and a transmission interface. The processor is configured to invoke a program stored in a memory, to enable the memory access apparatus to implement the method in the foregoing embodiment.

An embodiment of this application further provides a computer-readable storage medium. The computer-readable storage medium includes a computer program. When the computer program is run on a computer or a processor, the computer or the processor is enabled to perform the method in the foregoing embodiment.

An embodiment of this application further provides a chip, including a processor, configured to: invoke a computer program from a memory and run the computer program, to enable a device, that is equipped with the chip, to perform the method in the foregoing embodiment.

An embodiment of this application further provides a computer program product. The computer program product includes a computer program. When the computer program is run on a computer or a processor, the computer or the processor is enabled to perform the method in the foregoing embodiment.

It should be understood that, in embodiments of this application, sequence numbers of the foregoing processes do not mean execution sequences. The execution sequences of the processes should be determined based on functions and internal logic of the processes, and should not be construed as any limitation on the implementation processes of embodiments of this application.

Persons of ordinary skill in the art may be aware that units and algorithm steps in the examples described with reference to embodiments disclosed in this specification may be implemented by using electronic hardware or a combination of computer software and electronic hardware. Whether these functions are performed in a form of hardware or software depends on particular applications and design constraint conditions of the technical solutions. Persons skilled in the art may use different methods to implement the described functions for each particular application, but it should not be considered that the implementation goes beyond the scope of this application.

It may be clearly understood by persons skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or the communication connections between the apparatuses or the units may be implemented in electrical, mechanical, or other forms.

The units described as separate parts may or may not be physically separate, and the parts displayed as units may or may not be physical units, may be located in one position, or may be distributed on a plurality of network elements. Some or all of the units may be selected based on an actual requirement, to achieve the objectives of the solutions of embodiments.

In addition, functional units in embodiments of this application may be integrated into one processing unit, each of the units may exist alone physically, or two or more units are integrated into one unit.

When being implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application.

A sequence of the steps of the method in embodiments of this application may be adjusted, combined, or removed based on an actual requirement. In addition, for terms and descriptions in embodiments of this application, refer to corresponding descriptions in another embodiment.

The modules in the apparatus in embodiments of this application may be combined, divided, or deleted based on an actual requirement.

In conclusion, the foregoing embodiments are merely intended for describing the technical solutions of this application instead of limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

**Claims**

1. A memory access method, applied to a first apparatus, wherein the method comprises:

   receiving a first access request from a second apparatus, wherein the first access request comprises an identity number, a first security check value, and first information, and the first information comprises a first physical address;
   obtaining a second security check value through computation based on the identity number and the first information; and
   determining an access permission of the second apparatus for the first physical address based on the first security check value and the second security check value.

2. The method according to claim 1, wherein the identity number identifies the first apparatus, or the identity number identifies the second apparatus.

3. The method according to claim 1 or 2, wherein before the receiving a first access request from a second apparatus, the method further comprises:

   receiving a physical address application request from the second apparatus, wherein the physical address application request comprises the identity number;
   generating a first key for the identity number; and
   sending a first response to the physical address application request to the second apparatus, wherein the first response comprises the first security check value and the first information, and the first security check value is obtained through computation based on the first key.

4. The method according to any one of claims 1 to 3, wherein the first information further comprises a first permission value, and the first permission value indicates a first access permission of the second apparatus for the first physical address.

5. The method according to any one of claims 1 to 4, wherein the first information further comprises a granularity of physical address space, the granularity of the physical address space indicates a range of the physical address space, and the physical address space comprises the first physical address.

6. The method according to any one of claims 1 to 5, wherein the determining an access permission of the second apparatus for the first physical address based on the first security check value and the second security check value comprises:

   verifying the first security check value with the second security check value; and

if the first security check value is verified successfully with the second security check value, determining that the access permission of the second apparatus for the first physical address is access permitted.

7. The method according to any one of claims 1 to 6, wherein the first security check value and the second security check value are obtained through computation based on the first key, and the method further comprises:

generating a second key for the identity number;
sending an invalidation command to the second apparatus, wherein the invalidation command is used to invalidate the first physical address; and
replacing the first key with the second key after receiving a response to the invalidation command from the second apparatus or after the invalidation command expires.

8. The method according to claim 7, wherein after the invalidation command is sent to the second apparatus, and before the response to the invalidation command is received or before the invalidation command expires, the method further comprises:

receiving a security check value obtaining request from the second apparatus, wherein the security check value obtaining request comprises the identity number, a third security check value, and second information, the third security check value is obtained through computation based on the first key, and the second information comprises a second physical address;
obtaining a fourth security check value through computation based on the identity number, the second information, and the first key;
verifying the third security check value with the fourth security check value; and
if the third security check value is verified successfully with the fourth security check value, sending a second response to the security check value obtaining request to the second apparatus, wherein the second response comprises a fifth security check value, and the fifth security check value is obtained through computation based on the second key.

9. The method according to claim 8, wherein the second information further comprises a second permission value, and the second permission value indicates a first access permission of the second apparatus for the second physical address.

10. The method according to claim 8 or 9, wherein the second information further comprises the granularity of the physical address space, the granularity of the physical address space indicates the range of the physical address space, and the physical address space comprises the second physical address.

11. The method according to any one of claims 7 to 10, wherein after the invalidation command is sent to the second apparatus, and before the response to the invalidation command is received or before the invalidation command expires, the method further comprises:

receiving a second access request from the second apparatus, wherein the second access request comprises the identity number, a sixth security check value, and third information, and the third information comprises a third physical address;
obtaining a seventh security check value through computation based on the identity number, the third information, and the first key, and obtaining an eighth security check value through computation based on the identity number, the third information, and the second key;
separately verifying the sixth security check value with the seventh security check value and the eighth security check value; and
if the sixth security check value is verified successfully with the seventh security check value, or the sixth security check value is verified successfully with the eighth security check value, determining that an access permission of the second apparatus for the third physical address is access permitted.

12. The method according to any one of claims 1 to 5, wherein the first apparatus comprises a region table, the region table comprises a first range index and a fourth permission value, the first range index corresponds to the fourth permission value, and the fourth permission value indicates a second access permission for the first physical address; and the first information further comprises the first range index.

13. The method according to claim 12, wherein the determining an access permission of the second apparatus for the first physical address based on the first security check value and the second security check value comprises:

verifying the first security check value with the second security check value; and
if the first security check value is verified successfully with the second security check value, and the second access permission indicated by the fourth permission value is access permitted, determining that the access permission of the second apparatus for the first physical address is access permitted.

14. The method according to claim 12 or 13, wherein the method further comprises:
modifying the fourth permission value in the region table to a fifth permission value.

15. A memory access method, applied to a second apparatus, wherein the method comprises:

sending a first access request to a first apparatus, wherein the first access request comprises an identity number, a first security check value, and first information, and the first information comprises a first physical address, wherein
the identity number and the first information are used to obtain a second security check value through computation; and
the first security check value and the second security check value are used to determine an access permission of the second apparatus for the first physical address.

16. The method according to claim 15, wherein the identity number identifies the first apparatus, or the identity number identifies the second apparatus.

17. The method according to claim 15 or 16, wherein before the sending a first access request to a first apparatus, the method further comprises:

sending a physical address application request to the first apparatus, wherein the physical address application request comprises the identity number; and
receiving a first response to the physical address application request from the first apparatus, wherein the first response comprises the first security check value and the first information, the first security check value is obtained through computation based on a first key, and the first key is generated for the identity number.

18. The method according to any one of claims 15 to 17, wherein the first information further comprises a first permission value, and the first permission value indicates a first access permission of the second apparatus for the first physical address.

19. The method according to any one of claims 15 to 18, wherein the first information further comprises a granularity of physical address space, the granularity of the physical address space indicates a range of the physical address space, and the physical address space comprises the first physical address.

20. The method according to any one of claims 15 to 19, wherein the method further comprises:

receiving an invalidation command from the first apparatus, wherein the invalidation command is used to invalidate the first physical address; and
sending a response to the invalidation command to the first apparatus.

21. The method according to claim 20, wherein after the invalidation command is received, and before the response to the invalidation command is sent, the method further comprises:

sending a security check value obtaining request to the first apparatus, wherein the security check value obtaining request comprises the identity number, a third security check value, and second information, the third security check value is obtained through computation based on the first key, and the second information comprises a second physical address; and
receiving a second response to the security check value obtaining request from the first apparatus, wherein the second response comprises a fifth security check value, the fifth security check value is obtained through computation based on a second key, and the second key is generated for the identity number.

22. The method according to claim 21, wherein the second information further comprises a second permission value, and the second permission value indicates a first access permission of the second apparatus for the second physical address.

23. The method according to claim 21 or 22, wherein the second information further comprises the granularity of the physical address space, the granularity of the physical address space indicates the range of the physical address space, and the physical address space comprises the second physical address.

24. The method according to any one of claims 20 to 23, wherein after the invalidation command is received, and before the response to the invalidation command is sent, the method further comprises:
sending a second access request to the first apparatus, wherein the second access request comprises the identity number, a sixth security check value, and third information, and the third information comprises a third physical address.

25. The method according to any one of claims 15 to 19, wherein the first apparatus comprises a region table, the region table comprises a first range index and a fourth permission value, the first range index corresponds to the fourth permission value, and the fourth permission value indicates a second access permission for the first physical address; and the first information further comprises the first range index.

26. A memory access apparatus, used in a first apparatus, wherein the apparatus comprises:

a communication unit, configured to receive a first access request from a second apparatus, wherein the first access request comprises an identity number, a first security check value, and first information, and the first information comprises a first physical address; and
a processing unit, configured to: obtain a second security check value through computation based on the identity number and the first information; and
determine an access permission of the second apparatus for the first physical address based on the first security check value and the second security check value.

27. The method according to claim 26, wherein the identity number identifies the first apparatus, or the identity number identifies the second apparatus.

28. A memory access apparatus, used in a second apparatus, wherein the apparatus comprises:

a communication unit, configured to send a first access request to a first apparatus, wherein the first access request comprises an identity number, a first security check value, and first information, and the first information comprises a first physical address, wherein
the identity number and the first information are used to obtain a second security check value through computation; and
the first security check value and the second security check value are used to determine an access permission of the second apparatus for the first physical address.

29. The method according to claim 28, wherein the identity number identifies the first apparatus, or the identity number identifies the second apparatus.

30. A memory access apparatus, comprising a processor and a transmission interface, wherein the processor is configured to invoke a program stored in a memory, to enable the memory access apparatus to implement the method according to any one of claims 1 to 14 or claims 15 to 25.

31. A computer-readable storage medium, wherein the computer-readable storage medium comprises a computer program, and when the computer program is run on a computer or a processor, the computer or the processor is enabled to perform the method according to any one of claims 1 to 14 or claims 15 to 25.

32. A chip, comprising a processor, configured to invoke a computer program from a memory and run the computer program, to enable a device that is equipped with the chip to perform the method according to any one of claims 1 to 14 or claims 15 to 25.

Read_image(in_img[])
tmp_1[]=step1(in_img[]):
tmp_2[]=step2(tmp_1[]):
out_img[]=step3(tmp_2[]):

Host
(Host)

Read_image(in_img[])
...
out_img[]=step3(tmp_2[]):

CPU
processing
core (Core)

CPU
processing
core (Core)

...

CPU
processing
core (Core)

Internal storage

Controller

Interconnect bus

Input/output memory management unit (IOMMU)/System
memory management unit (SMMU)

Accelerator
(Accelerator 1)

step3(tmp_1[]):

I/O interface

Port

Port

Graphics
processing unit
(GPU)

step1(tmp_1[]):

Switch
(Switch)

Tensor
processing unit
(TPU)

step2(tmp_1[]):

Switch
(Switch)

Solid-state
drive
(SSD)

Network
interface card
(NIC)

FIG. 1

Protection table (Protection Table)

Base address
(Base address)

Protection table boundary
(Protection Table boundary)

0     128     256

+byte offset
(byte offset)          | | | | ... |

128  129  130  131  ...

R|W R|W R|W R|W ...

Graininess (GS) of
physical address space

Physical address
number (Physical
Address number)

Physical
address (PA)

FIG. 2

Host (Host)

CPU

Internal storage

Permit (permit)

BDF-based physical address access vector (BDF PA access vector)

BDF=10.00

BDF=08.01

Reject (reject)

BDF=08.01

Reject (reject)

RC

RP

RP

BDF=08.01

EP

Switch (Switch)

BDF=10.00

BDF=20.00

EP

EP

FIG. 3

Host (Host)

| CPU processing core (Core) | CPU processing core (Core) | ... | CPU processing core (Core) | Internal storage

Controller |

Interconnect bus

Input/output memory management unit (IOMMU)/System memory management unit (SMMU)

Physical address access protection control (PAAPC) module

I/O interface

Port

Port

Node device 1

Switch (Switch)

Interconnect bus (for example, a PCIe bus)

Node device 2

Switch (Switch)

Node device 3

Node device 4

FIG. 4

Second
apparatus

First
apparatus

501: Send a first access request to the first
apparatus, where the first access request
includes an identity number, a first security
check value, and first information, and the
first information includes a first physical
address

First access request

502: Receive the first access request from
the second apparatus

503: Obtain a second security check value
through computation based on the identity
number and the first information

504: Determine an access permission of the
second apparatus for the first physical
address based on the first security check
value and the second security check value

FIG. 5

Accessing end

Accessed end

(601) Translation request
(Translation Request)

TO
FIG. 6B

Translation response (603)
(Translation Response)

TO
FIG. 6B

Physical address space segment, MAC,
permission, hint, and attribute (including a
granularity of physical address space, and a
range index)
(PA, MAC, Permission, hint, attr (including
granular size range_x, range_index))

(604) Access request
(Access Request)

TO
FIG. 6B

Physical address in the PA 0, MAC
corresponding to the PA 0,
granularity of the physical address
space, and range index
(PA0 with MAC, granular size,
range_x, range_index)

TO
FIG. 6B

FIG. 6A

FIG. 6B

FIG. 7A

CONT. FROM FIG. 7A                                                    CONT. FROM FIG. 7A

PA 0/PA 1/ PA 2

Security computing (Security computing)

MAC          MAC_1  707

Verify the MAC with MAC_1

Retry request (Retry request)          Retry (Retry)

Access request carrying a new MAC (request with new MAC)          PA 1/PA 2

Security computing (Security computing)

MAC          MAC_1

704

Invalidation response (invalidate response)

Verify the MAC with MAC_1

Permit access (Permit access)

Receive the invalidation response (Receive tag of invalidate response)

Access request carrying an old MAC (request with old MAC)    708    PA 0/PA 1/ PA 2

Security computing (Security computing)          708

MAC          MAC_1

Verify the MAC with MAC_1

Block (block) access

After invalidation expires, a MAC value cannot be computed based on key_0 but based on key_1. However, after a new MAC value is obtained, retry of an access request with a MAC value failed in verification is required (It is timeout to wait for invalidate completion, the key_0 can not be used to compute MAC value any more, can only key_1 be used to compute MAC value. However, the requests whose MAC value checking is failed will be required to retry after getting new MAC)

After the invalidation response is received, the access request with the MAC value failed in verification is directly discarded (after receiving the invalidate completion, the requests whose MAC value checking is failed will be dropped directly)

FIG. 7B

EP 4 478 199 A1

56

FIG. 8A

Region table

| Region number | Permission value B | Range index (range_index) |
|---|---|---|
| PA 0 | R\|W | 0 |
| PA 1 | R\|W | 1 |
| PA 2 | R\|W | 2 |
| PA 3 | R\|W | 3 |

805

Access request carrying a MAC
(request with old MAC)

Range index=1

PA 0

Security computing
(Security computing)

Key_0
(key_0)

$MAC\_x1\_0$ and $MAC\_x2\_0$

805

Access request carrying a MAC
(request with old MAC)

$MAC=MAC\_x1\_0$ or
$MAC=MAC\_x2\_0$

Yes

Determine whether the permission value B matches

No

Block (block) access

No

Range index=2

PA 1/PA 2

Security computing
(Security computing)

Key_0
(key_0)

$MAC\_x1\_0$ and $MAC\_x2\_0$

Block access

No

$MAC=MAC\_x1\_0$ or
$MAC=MAC\_x2\_0$

Yes

Determine whether the permission value B matches

Permit access
(Permit access)

Yes

FIG. 8B

EP 4 478 199 A1

900

**Internal storage access apparatus**

901

Processing unit

903 Storage unit

902

Communication unit

FIG. 9

1000

**Internal storage access apparatus**

1001

Processing unit

1003 Storage unit

1002

Communication unit

FIG. 10

## INTERNATIONAL SEARCH REPORT

| International application No. |
| --- |
| **PCT/CN2023/084173** |

**A. CLASSIFICATION OF SUBJECT MATTER**

G06F12/02(2006.01)i

According to International Patent Classification (IPC) or to both national classification and IPC

**B. FIELDS SEARCHED**

Minimum documentation searched (classification system followed by classification symbols)

IPC:G06F

Documentation searched other than minimum documentation to the extent that such documents are included in the fields searched

Electronic data base consulted during the international search (name of data base and, where practicable, search terms used)

CNABS; CNTXT; VEN; WOTXT; EPTXT; USTXT; CNKI; IEEE; 百度, BAIDU: 内存, 访问, 物理, 地址, 校验, 验证, 消息认证码, 匹配, 对比, 身份, 密钥, memory, access, physical, address, check, verify, message authentication code, match, compare, identification, key

**C. DOCUMENTS CONSIDERED TO BE RELEVANT**

| Category* | Citation of document, with indication, where appropriate, of the relevant passages | Relevant to claim No. |
| --- | --- | --- |
| Y | CN 112564909 A (INTEL CORP.) 26 March 2021 (2021-03-26) <br> description, paragraphs 23-114 | 1-32 |
| Y | CN 107911381 A (JINAN INSPUR HI-TECH INVESTMENT AND DEVELOPMENT CO., LTD.) 13 April 2018 (2018-04-13) <br> description, paragraphs 62-115 | 1-32 |
| Y | CN 113934656 A (INTEL CORP.) 14 January 2022 (2022-01-14) <br> description, paragraphs 28-184 | 1-32 |
| A | CN 110489983 A (GUANGDONG OPPO MOBILE COMMUNICATIONS CO., LTD.) 22 November 2019 (2019-11-22) <br> entire document | 1-32 |
| A | WO 2022058391 A1 (DOMETIC SWEDEN AB) 24 March 2022 (2022-03-24) <br> entire document | 1-32 |

☐ Further documents are listed in the continuation of Box C.    ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
| --- | --- |
| **31 May 2023** | **07 June 2023** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/084173**

| Patent document cited in search report | | | Publication date (day/month/year) | Patent family member(s) | | | Publication date (day/month/year) |
|---|---|---|---|---|---|---|---|
| CN | 112564909 | A | 26 March 2021 | US | 2020026661 | A1 | 23 January 2020 |
| | | | | US | 10949358 | B2 | 16 March 2021 |
| | | | | DE | 102020208234 | A1 | 25 March 2021 |
| | | | | EP | 3798856 | A1 | 31 March 2021 |
| | | | | EP | 3798856 | B1 | 28 December 2022 |
| CN | 107911381 | A | 13 April 2018 | None | | | |
| CN | 113934656 | A | 14 January 2022 | DE | 102020134207 | A1 | 30 December 2021 |
| | | | | US | 2021406199 | A1 | 30 December 2021 |
| CN | 110489983 | A | 22 November 2019 | CN | 110489983B | B | 14 May 2021 |
| WO | 2022058391 | A1 | 24 March 2022 | EP | 3972314 | A1 | 23 March 2022 |

Form PCT/ISA/210 (patent family annex) (July 2022)

**EP 4 478 199 A1**

## REFERENCES CITED IN THE DESCRIPTION

**Patent documents cited in the description**

- CN 202210326125
- CN 202310303459